(19) Europäisches Patentamt

European Patent Office

Office européen des brevets

(11) **EP 1 453 891 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(21) Anmeldenummer: **02793035.3**

(22) Anmeldetag: **16.12.2002**

(51) Int Cl.:
*C08J 3/12* (2006.01)      *C08L 101/14* (2006.01)

(86) Internationale Anmeldenummer:
**PCT/EP2002/014362**

(87) Internationale Veröffentlichungsnummer:
**WO 2003/051963 (26.06.2003 Gazette 2003/26)**

(54) **KOMPAKTIERTE ABSORBIERENDE POLYMERE, DEREN HERSTELLUNG UND VERWENDUNG**

COMPACTED ABSORBENT POLYMERS, THE PRODUCTION THEREOF AND THE USE OF THE SAME

POLYMERES ABSORBANTS COMPACTES, FABRICATION ET UTILISATION

(84) Benannte Vertragsstaaten:
**AT BE BG CH CY CZ DE DK EE ES FI FR GB GR IE IT LI LU MC NL PT SE SI SK TR**

(30) Priorität: **14.12.2001 DE 10161496**

(43) Veröffentlichungstag der Anmeldung:
**08.09.2004 Patentblatt 2004/37**

(73) Patentinhaber: **Stockhausen GmbH**
**47805 Krefeld (DE)**

(72) Erfinder:
• **MERTENS, Richard**
**47803 Krefeld (DE)**
• **NEUMANN, Claudius**
**64380 Rossdorf (DE)**

(74) Vertreter: **Herzog, Martin**
**Kahlhöfer . Neumann . Herzog . Fiesser,**
**Karlstrasse 76**
**40210 Düsseldorf (DE)**

(56) Entgegenhaltungen:
**EP-A- 0 844 270       US-A- 5 002 986**
**US-B1- 6 323 252**

EP 1 453 891 B1

**Beschreibung**

Die vorliegende Erfindung betrifft kompaktierte Superabsorber, herstellbar indem ein Gemisch, mindestens enthaltend synthetische partikelförmige Superabsorber, einer spezifischen Anpresskraft oder einem Druck ausgesetzt werden, Verfahren zur Herstellung solcher Superabsorber, aus derartigen Superabsorbern hergestellte Verbunde und die Verwendung solcher Superabsorber.

Sogenannte Superabsorber finden in vielen Bereichen der Technik oder der Hygiene häufig dann eine Anwendung, wenn wässrige Flüssigkeiten absorbiert und im wesentlichen in eine feste Phase eingebunden werden sollen, um nachteilige Wirkungen der wässrigen Flüssigkeiten im jeweiligen Umfeld zu vermeiden. Besonders oft werden dabei als Superabsorber Verbindungen eingesetzt, die aus synthetischen Polymeren bestehen bzw. solche synthetischen Polymere enthalten.

In der Regel liegen die Superabsorber, wenn sie im wesentlichen trocken sind, als spröde Salze vor. Daraus ergeben sich in der Praxis jedoch eine Reihe von Problemen. Die Permeabilität und damit die Absorptionseigenschaften der Superabsorber werden unter anderem von der Partikelgröße beeinflusst. Insbesondere kleine Partikel schränken die Permeabilität eines Superabsorbers stark ein, da sie bei Kontakt mit Wasser oder wässrigen Lösungen schnell anschwellen und dabei Kapillarstrukturen größerer Partikel blockieren können und so deren Absorptionseigenschaften nachteilig beeinflussen.

Im Rahmen üblicher Einsatzmöglichkeiten von Superabsorbern werden die Superabsorber in der Regel auf eine Korngrößen von etwa 150 bis etwa 850 $\mu$m vermahlen. Aufgrund der Sprödheit des Materials entsteht bei diesem Vorgang jedoch ein erheblicher Anteil an Partikeln mit einer Korngröße von weniger als 150 $\mu$m. Diese Partikel müssen jedoch aus den obengenannten Gründen vor dem Einsatz der Superabsorber entfernt werden. In der Regel geschieht dies durch Sieben. Das dabei abgetrennte Material mit einer Korngrößen von weniger als 250 $\mu$m kann jedoch nur bedingt wieder in den Herstellungsprozess zurückgeführt werden. Als Folge dessen entstanden in der Vergangenheit bei der Herstellung von Superabsorbern Anteile an Feinstäuben, die entweder kostspielig gelagert oder entsorgt werden mussten.

Um diesem Problem zu begegnen wurden in der Vergangenheit viele Versuche unternommen, derartige Feinstäube wieder in den Produktionskreislauf zurückzuführen. So ist es beispielsweise aus dem Stand der Technik bekannt, Feinstäube wieder in den Polymerisationsprozess zurückzuführen, um sie im Rahmen der Polymerisation wieder in größere Polymergebilde einzubauen. Werden Partikel mit einer Korngröße von weniger als 250 $\mu$m in den Polymerisationsprozess zurückgeführt, so wirken sie dort als Vernetzer. Nachteilig ist dabei jedoch, dass die Vernetzungseigenschaften in unterschiedlichen Partikelchargen variieren, so dass auf diese Weise ein definiertes Endprodukt mit definierten Eigenschaften nur schwer erhältlich ist.

Aus der US-A 5,002,986 ist es bekannt, Superabsorberpartikel in einer Mischzone mit einer wässrigen Lösung eines ionischen Vernetzers zu kontaktieren, um die Absorptionsrate zu erhöhen. Die nach den beschriebenen Verfahren erzielte Erhöhung der durchschnittlichen Partikelgröße ist jedoch für praktische Zwecke in der Regel nicht ausreichend und die Förderstabilität ist unbefriedigend.

Die WO 99/30752 betrifft kompaktierte Partikel zur Verhinderung von Gerüchen in absorbierenden Gegenständen. Die in der genannten Druckschrift beschriebenen kompaktierten Partikel werden durch Kompaktierung in Abwesenheit eines Bindemittels hergestellt. Diese Agglomerate zerfallen leicht in die ursprünglichen Feinstäube bei Kontakt mit Wasser.

Problematisch wirkt sich bei den aus dem Stand der Technik bekannten Verfahren die Tatsache aus, dass die erhaltenen Kompaktmate in der Regel keine ausreichende Abriebstabilität aufweisen oder, wie in der letztgenannten Druckschrift beschrieben, nicht zur Verarbeitung größerer Mengen von Superabsorberpartikeln mit einer Partikelgröße von weniger als 250 $\mu$m, geeignet sind.

Weiterhin lässt sich den aus dem Stand der Technik bekannten Verfahren kein Hinweis darauf entnehmen, dass sich die oben beschriebenen Feinstäube alleine oder zusammen mit größeren Partikeln zu Formkörpern verarbeiten lassen, die ein für ihren Einsatz, insbesondere im Hygiene Bereich, befriedigendes Absorptionsverhalten bei ausreichender Stabilität aufweisen.

Der vorliegenden Erfindung lag daher die Aufgabe zugrunde, kompaktierte Superabsorber zur Verfügung zustellen, die eine für Ihre Einsatzgebiete, insbesondere im Bereich der Hygiene, befriedigende Dimensionsstabilität und ein gleichfalls befriedigendes Abriebverhalten aufweisen. Weiterhin lag der vorliegenden Erfindung die Aufgabe zugrunde, kompaktierte Superabsorber zur Verfügung zustellen, die einen hohen Anteil an Primärpartikeln mit einer Teilchengröße von weniger als 250 $\mu$m aufweisen und trotzdem ein für Ihre Anwendungen, insbesondere im Bereich der Hygiene, befriedigendes Absorptionsverhalten zeigen.

Weiterhin lag der vorliegenden Erfindung die Aufgabe zugrunde ein Verfahren zur Herstellung von kompaktierten Superabsorbern zur Verfügung zustellen, bei dem Superabsorberpartikel mit einer Partikelgröße von weniger als 250 $\mu$m eingesetzt werden können.

Es wurde nun gefunden, dass sich Superabsorberpartikel mit einer Teilchengröße von weniger als 250, bevorzugt weniger als 200 und besonders bevorzugt weniger als 150 $\mu$m zu Kompaktaten verarbeiten lassen, indem sie, in Anwesenheit eines anorganischen Bindemittels, einem spezifischen Anpressdruck oder einem Druck ausgesetzt werden.

Gelöst werden die der Erfindung zugrundeliegenden Aufgaben daher durch kompaktierte Superabsorberpartikel und Verfahren zu deren Herstellung, wie sie dem nachfolgenden Text zu entnehmen sind.

Gegenstand der vorliegenden Erfindung sind daher kompaktierte Superabsorber, herstellbar, indem ein Gemisch, mindestens enthaltend synthetische partikelförmige Superabsorber, sowie ein anorganisches Bindemittel, einer spezifischen Anpresskraft von mindestens 3 kN/cm oder einem Druck von mindestens 3 kN/cm$^2$ ausgesetzt werden, wobei mehr als 5 %, bevorzugt mehr als 20 % und besonders bevorzugt mehr als 35 % der eingesetzten Partikel eine Partikelgröße von 250 $\mu$m oder weniger, bevorzugt von 200 $\mu$m oder weniger und besonders bevorzugt von 150 $\mu$m oder weniger aufweisen. In einer bevorzugten Ausführungsform des erfindungsgemäßen kompaktierten Superabsorbers weisen mehr als 35 Gew.-% der eingesetzten Partikel eine Partikelgröße von weniger als 150 $\mu$m auf.

Eine im Rahmen der vorliegenden Erfindung als "kompaktierter Superabsorber" bezeichnete Zusammensetzung enthält mindestens einen Superabsorber. Als Superabsorber eignen sich im Rahmen der vorliegenden Erfindung grundsätzlich alle synthetischen oder zumindest teilsynthetischen Stoffe, die mindestens 4, bevorzugt mindestens 10 und besonders bevorzugt mindestens 100 g/g ihres eigenen Gewichtes an Wasser aufnehmen können. Im Rahmen einer bevorzugten Ausführungsform der vorliegenden Erfindung werden als Absorptionsmittel synthetische Materialien, insbesondere absorbierende Polymere, eingesetzt.

Ein erfindungsgemäss geeignetes, absorbierendes Polymer beinhaltet vorzugsweise mindestens ein auf mindestens einem monoethylenisch ungesättigtem Monomeren mit einer Säuregruppe basierendes Polymeres. Die Säuregruppen des eingesetzten Monomeren können teilweise oder vollständig, bevorzugt teilweise neutralisiert sein. In diesem Zusammenhang wird auf DE 195 29 348 verwiesen, deren Offenbarung hiermit als Referenz eingeführt wird und als Teil der Offenbarung des vorliegenden Textes angesehen wird.

Bevorzugte monoethylenisch ungesättigte Monomere mit einer Säuregruppe sind Acrylsäure, Methacrylsäure, Ethacrylsäure, $\alpha$-Chloracrylsäure, $\alpha$-Cyanoacrylsäure, $\beta$-Methylacrylsäure (Crotonsäure), $\alpha$-Phenylacrylsäure, $\beta$-Acryloxypropionsäure, Sorbinsäure, $\alpha$-Chlorsorbinsäure, 2'-Methylisocrotonsäure, Zimtsäure, p-Chlorzimtsäure, Stearylsäure, Itaconsäure, Citraconsäure, Mesacronsäure, Glutaconsäure, Aconitsäure, Maleinsäure, Fumarsäure, Tricarboxyethylen und Maleinsäureanhydrid, hydroxyl- oder aminogruppenhaltige Ester der vorstehenden Säuren, vorzugsweise der Acryl- oder Methacrylsäure, wie z. B. 2-Hydroxyethylacrylat, N,N-Dimethylaminoethylacrylat sowie die analogen Derivate der Methacrylsäure, wobei Acrylsäure sowie Methacrylsäure besonders und Acrylsäure darüber hinaus bevorzugt sind.

Zusätzlich zu dem monoethylenisch ungesättigten Monomer mit einer Säuregruppe kann ein im Rahmen der vorliegenden Erfindung zum Einsatz in Superabsorbern geeignetes Polymer auch auf weiteren, von dem monoethylenisch ungesättigten Monomer mit einer Säuregruppe verschiedenen Comonomeren basieren. Als Comonomere bevorzugt sind ethylenisch ungesättigte Sulfonsäuremonomere, ethylenisch ungesättigte Phosphonsäuremonomere und Acrylamide.

Ethylenisch ungesättigte Sulfonsäuremonomere sind vorzugsweise aliphatische oder aromatische Vinylsulfonsäuren oder acrylische oder methacrylische Sulfonsäuren. Als aliphatische oder aromatische Vinylsulfonsäuren sind Vinylsulfonsäure, Allylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethylacrylat, Sulfoethylmethacrylat, Sulfopropylacrylat, Sulfopropylmethacrylat, 2-Hydroxy-3-methacryloxypropylsulfonsäure und 2-Acrylamid-2-methylpropansulfonsäure bevorzugt.

Ferner sind ethylenisch ungesättigte Phosphonsäuremonomere wie Vinylphosphonsäure, Allylphosphonsäure, Vinylbenzylphosphonsäure, Acrylamidoalkylphosphonsäuren, Acrylamidoalkyldiphosphonsäuren, phosphonomethylierte Vinylamine und (Meth)acrylphosphonsäurederivate bevorzugt.

Mögliche Acrylamide sind alkylsubstituierte Acrylamide oder aminoallcylsubstituierte Derivate des Acrylamides oder des Methacrylamides, wie N-Vinylamide, N-Vinylformamide, N-Vinylacetamide, N- Vinyl-N-Methylacetamide, N-Vinyl-N-methylformamide, N-Methylol(meth)acrylamid, Vinylpyrrolidon, N,N-Dimethylpropylacrylamid, Dimethylacrylamid oder Diethylacrylamid und die entsprechenden Methacrylamidderivate sowie Acrylamid und Methacrylamid, wobei Acrylamid bevorzugt ist.

In Mengen im Bereich von 0,01 bis 20, bevorzugt von 0,1 bis 15 und besonders bevorzugt von 0,5 bis 5 Gew.-%, bezogen auf die insgesamt eingesetzten Monomere, können als Comonomere auch Monomere mit einer geringen Löslichkeit in Wasser eingesetzt werden. Beispiele für derartige Monomere sind Acrylsäure- und Methacrylsäureester wie Ethylacrylat und Ethylmethacrylat, Butylacrylat und Butylmethacrylat, Vinylacetat, Styrol oder Isobutylen oder Gemische aus zwei oder mehr davon.

Weiterhin können in Mengen im Bereich von 0,01 bis 20, bevorzugt von 0,1 bis 15 und besonders bevorzugt von 0,5 bis 5 Gew.-%, bezogen auf die insgesamt eingesetzten Monomere, wasserlösliche Polymere der Monomerlösung zugesetzt werden. Beispiele sind Polymere oder Copolymere der oben beschriebenen Monomere wie Polyacrylsäure, teilweise verseiftes Polyvinylacetat, Polyvinylalkohl, Polyalkylenglykole, Stärke und Stärkederivate, Cellulose und Cellulosederivate sowie andere Polysaccharide.

Alle aufgeführten Säuren können als freie Säuren oder als Salze polymerisiert werden. Auch eine teilweise Neutralisation ist möglich. Ferner kann eine vollständige oder teilweise Neutralisation auch nach der Polymerisation erfolgen. Die Neutralisation der Monomere kann mit Alkalimetallhydroxiden, Erdalkalimetallhydroxiden, Ammoniak sowie Carbonaten oder Bicarbonaten oder Gemischen aus zwei oder mehr davon erfolgen. Daneben ist grundsätzlich jede weitere Base geeignet, die mit der zu neutralisierenden Säure ein wasserlösliches Salz bildet. Auch eine Mischneutralisation mit verschiedenen Basen ist denkbar. Bevorzugt ist die Neutralisation mit Ammoniak und Alkalimetallhydroxiden, besonders bevorzugt Natriumhydroxid und Ammoniak.

In einer bevorzugten Ausführungsform der vorliegenden Erfindung zeigt ein erfindungsgemäss zur Kompaktierung einsetzbarer Superabsorber mindestens eine der folgenden Eigenschaften:

(a) maximale Aufnahme von 0.9 Gew.-%iger wässriger NaCl-Lösung gemäss ERT (EDANA recomended Test) 440.1-99 in einem Bereich von 10 bis 1000, bevorzugt von 15 bis 500 und besonders bevorzugt von 20 bis 300 g/g,

(b) der mit 0.9 Gew.-%iger wässriger NaCl-Lösung extrahierbare Anteil gemäss ERT 470.1-99 beträgt weniger als 30, bevorzugt weniger als 20 und besonders bevorzugt weniger als 10 Gew.-%, bezogen auf Superabsorber,

(c) die Schwellzeit zum Erreichen von 80 % der maximalen Absorption von 0,9 Gew.-%iger wässriger NaCl-Lösung gemäss ERT 440.1-99 liegt im Bereich von 0,01 bis 180, bevorzugt von 0,01 bis 150 und besonders bevorzugt von 0,01 bis 100 min.,

(d) die Schüttdichte gemäss ERT 460.1-99 liegt im Bereich von 300 bis 1000, bevorzugt 310 bis 800 und besonders bevorzugt 320 bis 700 g/l,

(e) der pH-Wert gemäss ERT 400.1-99 von 1 g des Superabsorbers in 1 1 Wasser liegt im Bereich von 4 bis 10, bevorzugt von 5 bis 9 und besonders bevorzugt von 5,5 bis 7,5, sowie

(f) CRC gemäss ERT 441.1-99 im Bereich von 10 bis 100, bevorzugt 15 bis 80 und besonders bevorzugt 20 bis 60 g/g.

Die sich aus den vorstehenden Eigenschaften ergebenden Eigenschaftskombinationen von zwei oder mehr dieser Eigenschaften stellen jeweils bevorzugte Ausführungsformen des erfindungsgemässen Superabsorbers dar. Weiterhin als erfindungsgemässe Ausführungsformen besonders bevorzugt sind Superabsorber mit den nachfolgend als Buchstaben oder Buchstabenkombinationen dargestellten Eigenschaften oder Eigenschaftskombinationen: a, b, c, d, e, f, ab, abc, abcd, abcde, abcdef, bc, bcd, bcde, bcdef, cd, cde, cdef, de, def, ef, wobei a, b, c, f, ab und abf besonders bevorzugt sind.

Aus den vorgenannten Monomeren lässt sich ein der vorliegenden Erfindung zugrundeliegender Superabsorber durch verschiedene Polymerisationsweisen herstellen. Beispielsweise sind in diesem Zusammenhang Massepolymerisation, Lösungspolymerisation, Sprühpolymerisation, inverse Emulsionspolymerisation und inverse Suspensionspolymerisation zu nennen. Bevorzugt wird die Lösungspolymerisation in Wasser als Lösungsmittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die genannten Druckschriften werden hiermit als Referenz eingeführt, wobei die entsprechende Polymerisationsverfahren betreffenden Teile der genannten Druckschriften als Teil der Offenbarung des vorliegenden Textes betrachtet werden.

Ein im Rahmen der vorliegenden Erfindung zur Kompaktierung einsetzbarer Superabsorber kann beispielsweise durch einen chemischen Vernetzer oder durch thermische Vernetzung oder Strahlenvernetzung oder durch zwei oder mehr der genannten Verfahren vernetzt sein, wobei die Vernetzung durch einen chemischen Vernetzer bevorzugt ist.

Die chemische Vernetzung wird durch dem Fachmann allgemein bekannte Vernetzer erreicht. Derartige Vernetzer werden vorzugsweise in einer Menge von weniger als 7, bevorzugt 0,1 bis 5 Gew.-%, bezogen auf das Gesamtgewicht der eingesetzten Monomere, eingesetzt. Erfindungsgemäss bevorzugte Vernetzer sind Polyacryl- oder Polymethacrylsäureester, die beispielsweise durch die Umsetzung eines Polyols oder ethoxylierten Polyols wie Ethylenglykol, Propylenglykol, Trimethylolpropan, 1,6-Hexandiol, Glycerin, Pentaerythrit, Polyethylenglykol oder Polypropylenglykol mit Acrylsäure oder Methacrylsäure gewonnen werden. Als Vernetzer können auch Polyole, Aminoalkohole sowie deren Mono(meth)acrylsäureester und Monoallylether eingesetzt werden. Weiterhin sind auch Acrylsäureester der Monoallylverbindungen der Polyole und Aminoalkohole als Vernetzer geeignet. In diesem Zusammenhang wird auf DE 195 43 366 und DE 195 43 368 verwiesen. Die in den genannten Druckschriften enthaltene Offenbarung wird hiermit als Referenz eingeführt und wird somit als Teil der Offenbarung des vorliegenden Textes betrachtet.

Als geeignete Vernetzer kommen beispielsweise in Betracht: 1,4-Butandioldiacrylat, 1,4-Butandioldimethacrylat, 1,3-Butylenglykoldiacrylat, 1,3-Butylenglykoldimethacrylat, Diethylenglykoldiacrylat, Diethylenglykoldimethacrylat, ethoxyliertes Bisphenol-A-diacrylat, ethoxyliertes Bisphenol-A-dimethacrylat, 1,6-Hexandioldiacrylat, 1,6-Hexandioldimethacrylat, Neopentylglykoldimethacrylat, Polyethylenglykoldiacrylat, Polyethylenglykoldimethacrylat, Triethylengly-

koldiacrylat, Triethylenglykoldimethacrylat, Tripropylenglykoldiacrylat, Tetraethylenglykoldiacrylat, Tetraethylenglykol-dimethacrylat, Dipentaerythritpentaacrylat, Pentaerythrittetraacrylat, Pentaerythrittriacrylat, Trimethylolpropantriacrylat, Trimethyloltrimethacrylat, Tris(2-hydroxyethyl)isocyanurattriacrylat, Tris(2-hydroxy)isocyanurattrimethacrylat, Divinylester von Polycarbonsäuren, Diallylester von Polycarbonsäuren, Triallylterephthalat, Diallylmaleat, Diallylfumarat, Hexamethylenbismaleinimid, Trivinyltrimellithat, Divinyladipat, Diallylsuccinat, ein Ethylenglykoldivinylether, Cyclopentadiendiacrylat, Triallylamin, Tetraallylammoniumhalide, Divinylbenzol, Divinylether, N,N-Methylenbisacrylamid, N,N'-Methylenbismethacrylamid und Ethylenglykoldimethacrylat. Hierunter bevorzugte Vernetzer sind N,N'-Methylenbisacrylamid, N,N'-Methylenbismethacrylamid, Polyethylenglykoldiacrylat, Polyethylenglykoldimethacrylat oder Triallylamin oder Gemische aus zwei oder mehr der genannten Verbindungen.

Erfindungsgemäss einsetzbare Superabsorber können beispielsweise auch nachvernetzt sein. Als sogenannte "Nachvernetzer" geeignet sind organische Carbonate, polyquaternäre Amine, polyvalente Metallverbindungen und Verbindungen, die mindestens zwei funktionelle Gruppen aufweisen, die mit Carboxylgruppen des unbehandelten Superabsorbers reagieren können. Hierbei handelt es sich insbesondere um Polyole und Aminoalkohole wie Ethylenglykol, Diethylenglykol, Triethylenglykol, Tetraethylenglykol, Polyethylenglykol, Glycerin, Polyglycerin, Propylenglykol, Ethanolamin, Diethanolamin, Triethanolamin, Propanolamin, Polyoxypropylen, Oxyethylen-Oxypropylen-Blockpolymere, Sorbitanfettsäureester, Polyoxyethylensorbitanfettsäureester, Trimethylolpropan, Pentaerythrit, Polyvinylalkohol und Sorbitol, Polyglycidyletherverbindungen, wie Ethylenglykoldiglycidylether, Polyethylenglykoldiglycidylether, Glycerindiglycidylether, Glycerolpolyglycidylether, Pentaerythritpolyglycidylether, Propylenglycoldiglycidylether und Polypropylenglycoldiglycidylether, Polyaziridin-Verbindungen, wie 2,2-Bishydroxymethylbutanol-tris[3-(1-aziridinyl)propionat], 1,6-Hexamethylendiethylen-Harnstoff und Diphenylmethan-bis-4,4'-N,N'-diethylenharnstoff, Haloepoxyverbindungen wie Ethylendiamin, Diethylentriamin, Triethylentetramin, Tetraethylenpentamin, Pentaethylenhexamin und Polyethylenimine, Polyisocyanate wie 2,4-Toluylen-diisocyanat und Hexamethylendiisocyanat, Zinkhydroxide, Kalzium-, Aluminium-, Eisen-, Titan- und Zirkonhalogenide, Alkylencarbonate wie 1,3-Dioxalan-2-on und 4-Methyl-1,3-Dioxalan-2-On, polyvalente Metallverbindungen wie Salze, polyquaternäre Amine wie Kondensationsprodukte von Dimethylaminen und Epichlorhydrin, Homo- und Copolymere von Diallyldimethylamoniumchlorid und Homo- und Copolymere von Diethylamino (meth)acrylatmethylchloridammoniumsalzen. Unter diesen Verbindungen sind bevorzugt Diethylenglykol, Triethylenglykol, Polyethylenglykol, Glyzerin, Polyglyzerin, Propylenglykol, Diethanolamin, Triethanolamin, Polyoxypropylen, Oxy-thylenoxypropylen Blockcopolymer, Sorbitanfettsäureester, Polyoxyethylensorbitanfettsäureester, Trimethylolpropan, Pentaerythrit, Polyvinylalkohol, Sorbitol, Alkylencarbonate wie 1,3-Dioxolan-2-on, 1,3-Dioxolan-2-on, 4-Methyl-1,3-dioxolan-2-on, 4,5-Dimethyl-1,3-dioxolan-2-on, 4,4-Dimethyl 1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxopan-2-on, Poly-1,3-dioxolan-2-on und Ethylenglykoldiglycidylether, Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis- und Poly-2-oxazolidinone sowie Diglykolsilikate.

Von den vorgenannten Nachvernetzern ist Ethylencarbonat besonders bevorzugt.

Diese Verbindungen werden vorzugsweise in einer Menge im Bereich von 0,01 bis 30, bevorzugt 0,1 bis 20 und besonders bevorzugt 0,5 bis 10 Gew.-%, bezogen auf den unbehandelten Superabsorber eingesetzt. Organische Lösungsmittel können der Mischung in einer Menge von 0 bis 60, bevorzugt 0,1 bis 40 und besonders bevorzugt 0,2 bis 50 Gew.-%, bezogen auf das unbehandelte Polymer (Pu), zugesetzt werden. Als organische Lösungsmittel sind bevorzugt niedere Alkohole wie Methanol, Ethanol, n-Propanol, Isopropanol, n-Butanol, Isobutanol, sec-Butanol und t-Butanol, Ketone wie Aceton, Mehtylethylketon und Methylisobutylketon, Ether wie Dioxan, Tetrahydrofuran und Diethylether, Amide wie N,N-Dimethylformamid und N,N-Diethylformamid sowie Sulfoxide wie Dimethylsulfoxid.

Im Rahmen der vorliegenden Erfindung können darüber hinaus Superabsorber eingesetzt werden, die einen von einem Aussenbereich umgebenen Innenbereich aufweisen, wobei der Aussenbereich einen höheren Vernetzungsgrad als der Innenbereich aufweist. Weiterhin ist es in diesem Zusammenhang bevorzugt, dass der Innenbereich einen größeren Durchmesser als der Aussenbereich aufweist. Wenn im Rahmen der vorliegenden Erfindung ein derartiger so genannter nachvernetzter Superabsorber eingesetzt wird, so weist er vorzugsweise mindestens eine der folgenden Eigenschaften auf:

(A) maximale Aufnahme von 0.9 Gew-%iger wässriger NaCl-Lösung gemäss ERT 440.1-99 in einem Bereich von 10 bis 800, bevorzugt von 15 bis 400 und besonders bevorzugt von 20 von 200 g/g,
(B) der mit 0.9 Gew.-%iger wässriger NaCl-Lösung extrahierbare Anteil gemäss ERT 470.1-99 beträgt weniger als 30, bevorzugt weniger als 20 und besonders bevorzugt weniger als 10 Gew.-%, bezogen auf den nachvernetzten Superabsorber,
(C) die Schwellzeit zum Erreichen von 80 % der maximalen Absorption von 0,9 Gew.-%iger wässriger NaCl-Lösung gemäss ERT 440.1-99 liegt im Bereich von 0,01 bis 180, bevorzugt von 0,01 bis 150 und besonders bevorzugt von 0,01 bis 100 min.,
(D) die Schüttdichte gemäss ERT 460.1-99 liegt im Bereich von 300 bis 1000, bevorzugt 310 bis 800 und besonders bevorzugt 320 bis 700 g/l,

(E) der pH-Wert gemäss ERT 400.1-99 von 1 g des nachvernetzten Superabsorbers in 1 1 Wasser liegt im Bereich von 4 bis 10, bevorzugt von 5 bis 9 und besonders bevorzugt von 5,5 bis 7,5,

(F) CRC gemäss ERT 441.1-99 im Bereich von 10 bis 100, bevorzugt 15 bis 80 und besonders bevorzugt 20 bis 60 g/g,

Die sich aus den vorstehenden Eigenschaften ergebenden Eigenschaftskombinationen von zwei oder mehr dieser Eigenschaften stellen jeweils bevorzugte Ausführungsformen des erfindungsgemässen Verfahrens dar. Weiterhin als erfindungsgemässe Ausführungsformen besonders bevorzugt sind nachvemetzte Superabsorber, mit nachfolgend als Buchstaben oder Buchstabenkombinationen dargestellten Eigenschaften oder Eigenschaftskombinationen: A, B, C, D, E, F, AB, ABC, ABCD, ABCDE, ABCDEF, BC, BCD, BCDE, BCDEF, CD, CDE, CDEF, DE, DEF, EF.

Neben den genannten Polymeren kann eine erfindungsgemäss als "kompaktierter Superabsorber" bezeichnete Zusammensetzung noch weitere Zusatzstoffe enthalten.

Als Zusatzstoffe geeignet sind beispielsweise nicht wasserlösliche anorganische Feststoffe. Besonders geeignet sind dabei nicht wasserlösliche anorganische Feststoffe, die eine Teilchengröße in einem Bereich von etwa 0,001 bis etwa 1000 μm, insbesondere etwa 50 bis etwa 500 μm aufweisen. Im Rahmen einer bevorzugten Ausführungsform der vorliegenden Erfindung enthält ein erfindungsgemäßer kompaktierter Superabsorber einen nicht wasserlöslichen anorganischen Feststoff oder ein Gemisch aus zwei oder mehr nicht wasserlöslichen anorganischen Feststoffen, wobei die Partikelgröße der Feststoffpartikel innerhalb eines Bereichs von etwa 80 bis etwa 400 μm liegt, wobei vorzugsweise mindestens etwa 5%, beispielsweise mindestens etwa 10, 20, 50, oder mindestens etwa 80% der Feststoffpartikel eine Partikelgröße von weniger als etwa 200 μm, insbesondere weniger als etwa 150 μm, aufweisen. Besonders geeignete Partikelgröße liegen beispielsweise in einem Bereich von 5 nm bis etwa 100 μm.

Geeignete nicht wasserlösliche anorganische Feststoffe sind beispielsweise Titandioxid, Tonmineralien wie Bentonit, Kaolin, oder Attapulgit, Zeolith, pyrogene Kieselsäure und dergleichen.

Im Rahmen einer bevorzugten Ausführungsform der vorliegenden Erfindung werden als Zusatzstoffe nicht wasserlösliche anorganische Feststoffe eingesetzt, die mindestens eine der folgenden Eigenschaften zeigen:

(α) eine Oberfläche nach BET gemäss DIN 66131 von mindestens 10, bevorzugt von mindestens 50 und besonders bevorzugt von mindestens 200 und darüber hinaus im Bereich von 180 bis 1000 m$^2$/g,

(β) einen pH-Wert in einer 4%igen wässrigen Dispersion im Bereich von 2 bis 11, bevorzugt von 2,5 bis 8 und besonders bevorzugt von 3 bis 5,

(γ) ein Stampfdichte in Anlehnung an DIN 787/XI und JIS K 5101/18 (nicht gesiebt): weniger als 800 g/l, bevorzugt weniger als 300 g/l bevorzugt weniger als 60 g/l.

Die sich aus den vorstehenden Eigenschaften ergebenden Eigenschaftskombinationen von zwei oder mehr dieser Eigenschaften stellen jeweils bevorzugte Ausführungsformen dar. Weiterhin als erfindungsgemässe Ausführungsformen besonders bevorzugt sind kompaktierte Superabsorber, in denen der anorganische Feststoff oder ein Gemisch aus zwei oder mehr anorganischen Feststoffen, die nachfolgend als Buchstaben oder Buchstabenkombinationen dargestellten Eigenschaften oder Eigenschaftskombinationen zeigt: α, β, γ, αβ, αβγ, βγ oder αγ, wobei αβγ besonders bevorzugt ist.

Weiterhin ist in dem erfindungsgemässen Verfahren bevorzugt, dass der anorganische Feststoff auf einer Siliziumverbindung basiert, wobei alle dem Verfahren bekannten Siliziumsauerstoffverbindungen, beispielsweise Aerosile und Kaoline bevorzugt sind, worunter Aerosile besonders bevorzugt sind.

Weiterhin ist es bevorzugt, dass ein erfindungsgemäßer kompaktierter Superabsorber den anorganische Feststoffe oder ein Gemisch aus zwei oder mehr anorganischen Feststoffen in einer Menge von etwa 0,001 bis etwa 40, bevorzugt von etwa 0,01 bis etwa 20 und besonders bevorzugt von etwa 0,05 bis etwa 5 Gew.-% enthält.

Im Rahmen der vorliegenden Erfindung enthält ein erfindungsgemäßer kompaktierter Superabsorber mindestens ein anorganisches Bindemittel. Es ist im Rahmen der vorliegenden Erfindung ebenfalls möglich und vorgesehen, dass ein erfindungsgemäßer Superabsorber ein Gemisch aus zwei oder mehr anorganischen Bindemitteln oder ein Gemisch aus einem oder mehreren anorganischen Bindemitteln und einem oder mehreren organischen Bindemittel enthält.

Als anorganische Bindemittel eignen sich im Rahmen der vorliegenden Erfindung wasserlösliche Verbindungen, die in wässriger Lösung ein ionisiertes Metallkation, ein Aminokation oder ein Iminokation bilden, dessen Wertigkeit mindestens zwei beträgt.

Besonders bevorzugt sind dabei Metallkationen, wie sie sich aus Metallen der Gruppen IIA - VIA, IB, IIB und VII des Periodensystems der Elemente erhalten lassen. Geeignet sind die Salze, Oxide, Hydroxide oder vergleichbare Verbindungen derartige Metalle, vorausgesetzt, dass die entsprechende Verbindung wasserlöslich ist, die Verbindung in Wasser ionisiert oder dissoziiert und das Metallkation, das Amin oder Imin eine Wertigkeit von mindestens 2 aufweist. Beispiele für geeignete Metallkationen, deren Wertigkeit mindestens 2 beträgt sind Aluminium, Kupfer, Zink, Zirkonium, Eisen, Kobalt, Chrom oder Titan oder Gemische aus zwei oder mehr davon. Im Rahmen der vorliegenden Erfindung ist Aluminium als Metallkation bevorzugt. Geeignete anorganisches Bindemittel sind beispielsweise Aluminiumsulfat, Aluminiumnatriumsulfat, Polyaluminiumchlorid, Aluminiumdiacetat, basisches Aluminiumhydroxid (wobei das Molverhältnis von Aluminiumhydroxid und Natriumhydroxid etwa 1:1 beträgt), Kobaltacetat, Kupfersulfat, Zinkacetat, Zirkoniumacetat, Zirkoniumtetrachlorid oder Zirkoniumnitrat oder Gemische aus zwei oder mehr der genannten Verbindungen. Im Rahmen einer weiteren bevorzugten Ausführungsform der vorliegenden Erfindung enthält ein erfindungsgemäßer kompaktierter Superabsorber als anorganisches Bindemittel ein Aluminiumsalz, insbesondere Aluminiumsulfat.

Im Rahmen einer weiteren bevorzugten Ausführungsform der vorliegenden Erfindung kann ein erfindungsgemäßer kompaktierter Superabsorber neben oder anstatt einem anorganischen Bindemittel ein organisches Bindemittel enthalten. Als organische Bindemittel sind im Rahmen der vorliegenden Erfindung grundsätzlich alle Bindemittel geeignet, die mindestens ein polyvalentes Amin oder Imin zur Verfügung stellen. Geeignet sind dabei im Rahmen der vorliegenden Erfindung organischen Bindemittel, die ein Molekulargewicht von bis zu etwa 200 aufweisen. Es ist jedoch erfindungsgemäss ebenso vorgesehen organische Bindemittel als Bestandteil der erfindungsgemässen kompaktierter Superabsorber einzusetzen, die ein deutlich darüber liegendes Molekulargewicht aufweisen, beispielsweise bis zu etwa 5.000.000, insbesondere etwa 1000 bis etwa 1.000.000.

Geeignete organische Bindemittel sind beispielsweise Polyamine, Polyimine, Polyamide, Chitosan oder Polyvinylpyrrolidon.

Der Anteil anorganischer oder eines Gemischs aus zwei oder mehr derartiger Bindemittel im kompaktierten Superabsorber beträgt im Rahmen der vorliegenden Erfindung bis zu etwa 30 Gew.-%, beispielsweise etwa 0,1 bis etwa 15 Gew.-% oder etwa 0,5 bis etwa 5 Gew.-%.

Im Rahmen einer weiteren bevorzugten Ausführungsform der vorliegenden Erfindung enthält ein erfindungsgemäßer kompaktierter Superabsorber Wasser. Der Wassergehalt eines erfindungsgemässen kompaktierten Superabsorbers beträgt beispielsweise bis zu etwa 30 Gew.-%, vorzugsweise jedoch etwa 0,1 bis etwa 15 Gew.-% oder etwa 0,5 bis etwa 10 Gew.-%. Besonders geeignete Wassergehalte liegen beispielsweise in einem Bereich von etwa 0,8 bis etwa 5 Gew.-%.

Im Rahmen einer weiteren Ausführungsform der vorliegenden Erfindung enthält ein erfindungsgemäßer kompaktierter Superabsorber noch mindestens einen weiteres organisches Polymeres (Ps), das nicht unter die obige Definition eines Superabsorbers oder eines Bindemittels fällt.

Es ist erfindungsgemäss bevorzugt, wenn ein derartiges weiteres Polymeres (Ps) als 4 Gew.-%ige Lösung in deionisiertem Wasser eine Viskosität bei 20 °C im Bereich von 1 bis 100.000, vorzugsweise von 10 bis 50.000 und besonders bevorzugt von 100 bis 10.000 mPa·s besitzt.

Vorzugsweise handelt es sich bei dem Polymer (Ps) um Polyvinylalkohl, Polyethylenglycol, Polyglycerin, Gelatine, oder auf Sacchariden basierende Polymere. Als Beispiele seien hier Xanthan, Stärken, Guarkermehl, Alginat, Dextrin, Agar-Agar, Carragen, Tragant, Gummi Arabicum, Alginate, Pektine, Polyosen, Guar-Mehl, Johannisbrotbaumkernmehl, Vinylpolymere, Polycarbonsäuren, Polyether genannt. Ein erfindungsgemäßer kompaktierter Superabsorber kann die genannten Polymeren jeweils einzeln oder als Gemisch aus zwei oder mehr davon enthalten.

Gemäss einer bevorzugten Ausführungsform der vorliegenden Erfindung basiert das Polymer (Ps) auf einem Saccharid. Besonders bevorzugt sind derivatisierte Saccharide, wie Ester, Ether und carboxymethylierte Derivate. Die Ether der Saccharide sind vorzugsweise mit $C_1$- bis $C_{1000000}$-, bevorzugt $C_1$- bis $C_{10000}$- und darüber hinaus bevorzugt mit $C_1$- bis $C_{10}$-Alkylgruppen derivatisierte Saccharide. Unter diesen wiederum sind die Methyl, Ethyl, Propyl, Butyl derivatisierten Saccharide bevorzugt, wobei die Methylgruppen derivatisierten Saccharide besonders bevorzugt sind. Beispiele für Ester der Saccharide sind Acetate, Acetobutyrate, Acetopropionate oder Propionate. Das Polymer (Ps) besteht vorzugsweise mindestens aus 10, bevorzugt mindestens 50 und besonders bevorzugt mindestens 90 Gew.-%, bezogen auf das Polymer (Ps), aus einem Saccharid beziehungsweise Polysaccharid. Unter den Polysacchariden sind Cellulose und Stärke bevorzugt, wobei Cellulose besonders bevorzugt ist. Weiterhin ist es bevorzugt, dass die Cellulosen als Carboxymethylcellulosen vorliegen, wobei Natrium- und Kaliumcarboxymethylcellulosen bevorzugt und Natriumcarboxymethylcellulose besonders bevorzugt ist.

Ein erfindungsgemäßer kompaktierter Superabsorber enthält im Rahmen einer bevorzugten Ausführungsform der vorliegenden Erfindung das weitere organische Polymere oder ein Gemisch aus zwei oder mehr weiteren organischen Polymeren in einer Menge von bis zu etwa 30 Gew.-% beispielsweise etwa 0,1 bis etwa 15 Gew.-% oder etwa 0,5 bis etwa 5 Gew.-%.

Die erfindungsgemässen kompaktierten Superabsorber sind im Rahmen der vorliegenden Erfindung durch ein Verfahren erhältlich, bei dem mindestens ein Superabsorber, gegebenenfalls in ab Mischung mit einem oder mehreren der weiteren obengenannten Bestandteile, einer spezifischen Anpresskraft von mindestens 3 kN/cm oder einem Druck von mindestens 3 kN/cm$^2$ ausgesetzt werden.

Im Rahmen der bei der Herstellung der erfindungsgemässen kompaktierten Superabsorber durchgeführten Kompaktierung wird ein Superabsorber oder ein Gemisch aus zwei oder mehr Superabsorbern oder ein Gemisch aus einem oder mehreren Superabsorbern und einem anorganischen Bindemittel oder Wasser und einem anorganischen Bindemittel sowie gegebenenfalls einem oder mehreren der obengenannten Zusatzstoffe einem Druck ausgesetzt, der innerhalb des obengenannten Bereichs liegt. Es ist dabei im Rahmen der vorliegenden Erfindung unerheblich, auf welche Weise dieser Druck ausgeübt wird. Vorzugsweise wird im Rahmen der vorliegenden Erfindung jedoch eine Agglomerationen durch Stempel oder Walzen bevorzugt. Besonders bevorzugt ist im Rahmen der vorliegenden Erfindung die Walzenkompaktierung.

Bei der Walzenkompaktierung wird eine der obengenannten Zusammensetzungen durch Verpressen zwischen zwei jeweils im entgegengesetzten Drehsinn drehenden Walzen kompaktiert. Es ist dabei im Rahmen der vorliegenden Erfindung möglich und vorgesehen, dass zur Kompaktierung Glattwalzen oder Profilwalzen eingesetzt werden. Geeignete Verfahren zur Walzenkompaktierung sind dem Fachmann bekannt. Geeignet sind beispielsweise Verfahren zur Kompaktierung, Brikettierung, Tablettierung oder zur Granulierung, wie sie üblicherweise unter Einsatz entsprechend profilierter Walzen durchgeführt werden können.

Die zur Kompaktierung vorgesehenen Superabsorber enthaltenden Zusammensetzungen können grundsätzlich in der vorliegenden Form kompaktiert werden. Es ist jedoch im Rahmen der vorliegenden Erfindung bevorzugt, wenn die zur Kompaktierung vorgesehenen Zusammensetzungen vor dem Kompaktierungsschritt einer Vorverdichtung unterzogen werden. Vorzugsweise wird die Vorverdichtung in einem Schraubenverdichter (Verdichterschnecke) durchgeführt.

Im Rahmen einer bevorzugten Ausführungsform der vorliegenden Erfindung enthält eine zur Verdichtung vorgesehenen Zusammensetzungen ein anorganisches Bindemittel oder Wasser und ein anorganisches Bindemittel.

Zur möglichst homogenen Vermischung von Superabsorber und Wasser oder Superabsorber und Bindemittel oder eines Gemischs aus Superabsorber, Wasser und Bindemittel wird im Rahmen einer bevorzugten Ausführungsform der vorliegenden Erfindung der Superabsorber oder das Gemisch aus zwei oder mehr Superabsorbern mit anorganischen Bindemittel oder deren Gemisch im Rahmen der Vorverdichtung vermischt. Hierzu wird beispielsweise der Superabsorber oder das Gemisch aus zwei oder mehr Superabsorbern in einem Schraubenförderer eingeführt und nachfolgend, an einer stromabwärts gelegenen Stelle, Wasser oder Bindemittel oder deren Gemisch zugeführt. Wenn eine zur Kompaktierung vorgesehenen Zusammensetzungen noch weitere Zusatzstoffe enthält, so werden diese vorzugsweise ebenfalls im Rahmen der Vorverdichtung mit dem Superabsorber oder dem Gemisch aus zwei oder mehr Superabsorbern vermischt. Es ist jedoch im Rahmen der vorliegenden Erfindung ebenso vorgesehen, dass das Vermischen der Bestandteile der zur Kompaktierung vorgesehenen Zusammensetzungen nicht im Rahmen einer Vorverdichtung sondern in einem separaten Schritt durchgeführt wird. Zum Vermischen können in diesem Falle alle dem Fachmann bekannten Mischvorrichtungen eingesetzt werden.

Wenn eine zur Kompaktierung vorgesehene Zusammensetzung Wasser und ein Bindemittel enthält, so ist die Reihenfolge der Zugabe von Wasser und Bindemittel zum Superabsorber oder zum Gemisch aus zwei oder mehr Superabsorbern grundsätzlich beliebig. So kann beispielsweise zunächst das Wasser zugegeben werden und anschließend das Bindemittel oder zunächst das Bindemittel und anschließend das Wasser. Es ist im Rahmen der vorliegenden Erfindung jedoch ebenso vorgesehen, dass eine Zugabe von Wasser und Bindemittel gleichzeitig erfolgt, insbesondere als Lösung des Bindemittels oder des Gemischs aus zwei oder mehr Bindemitteln in Wasser.

Wenn eine zur Kompaktierung vorgesehene Zusammensetzung ein Bindemittel und weitere Zusatzstoffe enthält, so ist die Reihenfolge der Zugabe von Bindemittel und Zusatzstoffen zum Superabsorber oder zum Gemisch aus zwei oder mehr Superabsorbern grundsätzlich beliebig. Es ist im Rahmen der vorliegenden Erfindung jedoch bevorzugt, wenn die Zugabe von Zusatzstoffen nach der Zugabe von Bindemittel oder Bindemitteln zum Superabsorber oder zum Gemisch aus zwei oder mehr Superabsorbern erfolgt.

Die Kompaktierung erfolgt im Rahmen der vorliegenden Erfindung bei einer Temperatur von etwa 0 °C bis etwa 100 °C. Vorzugsweise erfolgt die Kompaktierung in einem Temperaturbereich von etwa 20 °C bis etwa 80 °C. Die erforderliche Temperatur kann dabei beispielsweise durch äußeres Kühlen oder Beheizen des Kompaktierungsaggregats eingestellt werden. So kann beispielsweise bei einer Walzenkompaktierung eine Walze oder beide Walzen gekühlt oder beheizt werden. Es ist im Rahmen der vorliegenden Erfindung jedoch ebenso vorgesehen, dass ein Kompaktierungsaggregat im wesentlichen ohne äußere Temperaturbeeinflussung betrieben wird. In diesem Zusammenhang kann beispielsweise in Abhängigkeit von der zur Kompaktierung eingesetzten Zusammensetzung und Form im Rahmen der Kompaktierung ausgeübten Druck eine Temperaturerhöhung des Materials während der Kompaktierung festgestellt werden. Die während der Kompaktierung herrschende Temperatur sollte in jedem Fall so gewählt werden, dass die erfindungsgemässen kompaktierten Superabsorber keinen Verlust an Absorptionshraft durch Versinterung zeigen.

Der während der Kompaktierung herrschende Druck bzw. die auf die zur Kompaktierung vorgesehene Zusammensetzung ausgeübte Kraft wird im Rahmen der vorliegenden Erfindung so gewählt, dass mindestens ein Druck von etwa 3 kN/cm$^2$ oder eine spezifische Anpresskraft von mindestens 3 kN/cm auf die zur Kompaktierung vorgesehene Zusammensetzung ausgeübt wird. Unter der "spezifischen Anpresskraft" wird im Rahmen des vorliegenden Textes eine zwischen zwei Walzen herrschende Kraft pro cm Walzenbreite verstanden.

Vorzugsweise wird die Kompaktierung im Rahmen der vorliegenden Erfindung mittels Walzen erzielt. Dabei herrscht vorzugsweise eine spezifische Anpresskraft von mindestens etwa 10 kN/cm, besonders bevorzugt mindestens etwa 40 kN/cm, und darüber hinaus bevorzugt mindestens etwa 100 kN/cm, wobei vorzugsweise die spezifische Anpresskraft einen Wert von 1000 kN/cm nicht übersteigt.

Die erfindungsgemässen kompaktierten Superabsorber werden im Rahmen der vorliegenden Erfindung nach dem Kompaktierungsschritt entweder in der vorliegenden Form weiterverarbeitet oder getrocknet. Sofern die zur Kompaktierung eingesetzte Zusammensetzung Wasser enthielt kann die Trocknung dabei entweder bei verringertem Druck oder bei Umgebungsdruck durchgeführt werden, die Temperatur beträgt dabei vorzugsweise etwa 30 bis etwa 180, beispielsweise etwa 50 bis etwa 90 °C. Die Trocknungsdauer beträgt, je nach angestrebtem Wassergehalt der kompaktierten Superabsorber, etwa 5 Minuten bis etwa 5 Stunden.

Die erfindungsgemässen kompaktierten Superabsorber fallen im Rahmen der Kompaktierung, je nach Wahl des zur Kompaktierung eingesetzten Verfahrens, als Schuppen, Granulate, Pastillen, Tabletten oder ähnliche Formkörper an, wie sie durch eine geeignete Wahl des Kompaktierung Verfahrens hergestellt werden können.

Es ist im Rahmen der vorliegenden Erfindung grundsätzlich vorgesehen, dass die kompaktierten Superabsorber als Formkörper, wie sie direkt nach der Kompaktierung und sich gegebenenfalls anschließender Trocknung erhalten werden, weiter verwendet werden können.

Im Rahmen der vorliegenden Erfindung herstellbare Formkörper können grundsätzlich eine im wesentlichen beliebige unregelmäßige oder regelmäßige Raumform aufweisen. Geeignete regelmäßige Raumformen sind beispielsweise Kugeln, Ellipsoide, Zylinder, Würfel oder Quader.

Es ist im Rahmen der vorliegenden Erfindung jedoch ebenso möglich und vorgesehen, dass die kompaktierten Superabsorber nach dem Kompaktierungsschritt und gegebenenfalls einem sich daran anschließenden Trocknungsschritt einer Vermahlung unterzogen werden, wobei eine derartige Vermahlung vorzugsweise zu Korngrößen im Bereich von etwa 100 $\mu$m bis etwa 1000 $\mu$m, bevorzugt von 150 $\mu$m bis 1000 $\mu$m und besonders bevorzugt von 150 bis 850 $\mu$m führt. Vorzugsweise wird eine Korngrößenverteilung angestrebt, die ein Gewichtsmittelwert der Korngröße im Bereich von etwa 400 bis 700 $\mu$m mit nicht mehr als 16 Gew.-% dieser Körner mit einer Körnergröße von weniger als 200 $\mu$m und nicht mehr als 16 Gew.-% dieser Körner eine Körnergröße von nicht mehr als 1200 $\mu$m aufweisen. Es hat sich besonders bewährt, die Korngrößenverteilung durch Sieben einzustellen.

Im Rahmen einer weiteren bevorzugten Ausführungsform der vorliegenden Erfindung können die kompaktierten Superabsorber mit einem Überzug eines wasserlöslichen Polymeren versehen werden. Derart gecoatete kompaktierte Superabsorber weisen den Vorteil auf, dass sie beim Transport weniger Abrieb erzeugen, eine geringere Empfindlichkeit gegenüber Luftfeuchtigkeit aufweisen und in einem wässrigen Medium trotzdem schnell ihre Absorptionswirkung entfalten. Ferner bildet sich bei der Verarbeitung von kompaktierten Superabsorbern im Vergleich zu den nicht kompaktierten Superabsorbern weniger Staub.

Als für einen derartigen Überzug in Frage kommende wasserlösliche Polymere eignen sich im Rahmen der vorliegenden Erfindung grundsätzlich alle Polymere, die eine Wasserlöslichkeit von mindestens 1 g/l aufweisen. Derartige Polymere weisen vorzugsweise eine oder mehrere Säuregruppen am Polymerrückgrat auf. Besonders geeignet sind im Rahmen der vorliegenden Erfindung Polymere, die eine Carbonsäure- oder Sulfonsäuregruppe oder beides aufweisen, besonders bevorzugt sind Polymeren, die am Polymerrückgrat Carbonsäuregruppen aufweisen. Zur Herstellung der erfindungsgemäss als Überzüge geeigneten Polymeren sind beispielsweise die bereits oben im Rahmen des vorliegenden Textes genannten Monomere geeignet.

Im Rahmen einer bevorzugten Ausführungsform der vorliegenden Erfindung werden als wasserlösliche Polymere Polymerisate der Acrylsäure oder Methacrylsäure oder Copolymerisate von Acrylsäure und Methacrylsäure eingesetzt. Erfindungsgemäss geeignete Polymeren können neben dem Bestandteil Acrylsäure oder Methacrylsäure oder beiden Bestandteilen noch weitere Monomerbausteine enthalten, die nicht notwendigerweise eine Säuregruppe aufweisen müssen. Derartige geeignete Comonomere sind beispielsweise Acrylsäureester oder Methacrylsäureester oder Carbonsäurevinylester, Acrylnitril, Styrol, Isopren und Butadien, insbesondere Vinylacetat.

Im Rahmen einer besonders bevorzugten Ausführungsform der vorliegenden Erfindung werden die erfindungsgemäss eingesetzten Absorptionsmittel mit einer Polymerschicht überzogen, die mindestens eines der beiden unter dem Handelsnamen EUDRAGIT® L100 oder EUDRAGIT® S100 (Hersteller: Firma Röhm GmbH, Darmstadt, Deutschland) enthält. Bei diesem Polymeren handelt es sich um anionische Polymere auf Basis von Methacrylsäure und Methacrylsäureestern. Das Verhältnis von Carboxylgruppen zu Esterbausteinen beträgt bei den EUDRAGIT® L-Typen etwa 1:1, bei den EUDRAGIT® S-Typen etwa 1:2.

Die genannten Polymeren werden auf die im Rahmen der vorliegenden Erfindung einsetzbaren Absorptionsmittel entweder als Lösung in organischen Lösemitteln (Alkohole, Aceton) als Abmischungen von organischen Lösungen mit Wasser oder als rein wässrige Latex Dispersionen aufgetragen.

Zu den Eigenschaften der vorzugsweise zur Herstellung einer derartigen Polymerschicht eingesetzten Polymeren und deren Anwendung wird explizit auf die Publikationen "EUDRAGIT-Magensaftresistente Überzüge (Basis-Info 1)" der Fa. Röhm GmbH sowie K. Lehmann und H.U. Petereit, Filmüberzüge auf Basis wässriger Polymethacrylat-Dispersionen mit verzögertem Zerfall im Darmbereich, Pharm. Ind, 55, 6, 615-618 (1993), K.O.R. Lehmann, Aqueous Polymeric Coatings for Pharmaceutical Dosage Forms, Chapter 4, Chemistry and Application Properties of Polymethacrylate Coating Systems, Edited by James W. McGinity, Marcel Dekker, Inc., New York, 1989, K. Lehmann, Microcapsules and Pharmacy, Chapter 4, Fluid-Bed Spray Coating, Edited by Max Donbrow, CRC Press, Inc, Boca Raton, 1992, Bezug genommen, deren Offenbarung als Gegenstand der Offenbarung des vorliegenden Textes betrachtet wird.

Zudem betrifft die Erfindung kompaktierte Superabsorber mit mindestens einer der folgenden Eigenschaften:

(β1) CRC (*Centrifugation Retention Capacity*) vom mindestens 10, bevorzugt von mindestens 15 und besonders bevorzugt von mindestens 20 g/g, darüber hinaus bevorzugt mindestens 25 g/g,
(β2) ein AAP (*Absorbency Against Pressure*) bei einer Belastung von 0,3 psi von mindestens 15, bevorzugt mindestens 20 g/g,
(β3) ein AAP bei einer Belastung von 0,9 psi von mindestens 8, bevorzugt mindestens 12 g/g,
(β4) Quelldruck von mindestens 100, vorzugsweise von mindestens 500, weiterhin bevorzugt von mindestens 600 und darüber hinaus bevorzugt 800 g.

Die sich aus den vorstehenden Eigenschaften ergebenden Eigenschaftskombinationen von zwei oder mehr dieser Eigenschaften stellen jeweils bevorzugte Ausführungsformen der erfindungsgemässen kompaktierten Superabsorber dar. Weiterhin als erfindungsgemässe Ausführungsformen besonders bevorzugt sind Verfahren, in denen der kompaktierte Superabsorber die nachfolgend als Buchstaben oder Buchstabenkombinationen dargestellten Eigenschaften oder Eigenschaftskombinationen zeigt: β1, β2, β3, β4, β1β2, β1β2β3, β1β2β3β4, β2β3, β2β3β4, β3β4, wobei β1, β2, β3, β1β2 und β1β2β3 besonders bevorzugt ist.

Eine erfindungsgemässe Ausführungsform bildet ein kompaktierter Superabsorber mit:

- CRC von mindestens 15 g/g,
- AAP bei 0,3 psi Belastung von mindestens 15 g/g,
- AAP bei 0,9 von mindestens 8 g/g, und
- Korngrößenverteilung im Bereich von 150 bis 850 $\mu$m.

Die vorliegende Erfindung betrifft auch ein Verfahren zur Herstellung kompaktierter Superabsorber, bei dem eine Zusammensetzung, mindestens enthaltend synthetische partikelförmige Superabsorber sowie ein anorganisches Bindemittel kompaktiert wird indem die Zusammensetzung einer spezifischen Anpresskraft von mindestens 3 kN/cm oder einem Druck von mindestens 3 kN/cm$^2$ ausgesetzt wird, wobei mehr als 5 %, bevorzugt mehr als 20 % und besonders bevorzugt mehr als 35 % der eingesetzten Partikel eine Partikelgröße von 250 $\mu$m oder weniger, bevorzugt von 200 $\mu$m oder weniger und besonders bevorzugt von 150 $\mu$m oder weniger aufweisen.

Kompaktierung Zusammensetzungen eingesetzt, die mindestens einen Superabsorber, Wasser und mindestens ein anorganisches Bindemittel oder deren Gemisch mit ein organischem Bindemittel enthalten.

Geeignete anorganische oder organische Bindemittel wurden bereits oben im Rahmen des vorliegenden Textes beschrieben.

Im Rahmen einer weiteren bevorzugten Ausführungsform der vorliegenden Erfindung enthält eine zur Kompaktierung vorgesehene Zusammensetzung Wasser und ein anorganisches Bindemittel.

Vorzugsweise beträgt der Wassergehalt einer zur Kompaktierung vorgesehenen Zusammensetzung mindestens etwa 0,1 Gew.-%, vorzugsweise liegt der Wassergehalt jedoch darüber, beispielsweise bei mindestens etwa 1, 2, 4, 8 oder 20 Gew.-%.

Gemäss einer weiteren bevorzugten Ausführungsform der vorliegenden Erfindung wird im Rahmen des erfindungsgemässen Verfahrens ein Superabsorber oder ein Gemisch aus zwei oder mehr Superabsorbern vor der Kompaktierung vorzugsweise mit einer wässrigen Lösung eines anorganischen Bindemittels versetzt und vermischt. Das Vermischen kann grundsätzlich, wie bereits oben beschrieben, auf beliebige Weise erfolgen. Es ist jedoch erfindungsgemäss bevorzugt, wenn das Vermischen von Superabsorber oder Superabsorbern und der wässrigen Lösung des Bindemittels im Rahmen einer Vorverdichtung vor dem eigentlichen Kompaktierungsschritt erfolgt.

Die Zugabe der entsprechenden Bindemittel erfolgt vorzugsweise durch wässrige Lösungen der entsprechenden Bindemittel, wobei geeignete wässrige Lösungen eine Konzentration von etwa 1 bis etwa 99 Gew.-%, beispielsweise etwa 5 bis etwa 60 Gew.-%, aufweisen. Beim Einsatz organischer Bindemittel kann gegebenenfalls eine höhere oder eine niedrigere Konzentration erforderlich sein, je nach Löslichkeit des Bindemittels in Wasser und in Abhängigkeit von der Viskosität einer derartigen wässrigen Lösung.

Wird als Bindemittel beispielsweise ein anorganisches Salz eines mehrwertigen Metallkations, wie oben beschrieben, eingesetzt, so beträgt die Konzentration einer ein derartiges Salz enthaltenden wässrigen Lösung vorzugsweise etwa 20 bis etwa 70 Gew.-%, insbesondere etwa 40 bis etwa 60 Gew.-%.

Im Rahmen einer bevorzugten Ausführungsform der vorliegenden Erfindung wird beim erfindungsgemässen Verfahren als Bindemittel eine wässrige Lösung von $Al_2(SO_4)_3 \cdot 18\ H_2O$ eingesetzt, wobei die Konzentration von $Al_2(SO_4)_3 \cdot 18\ H_2O$ in der Lösung etwa 50 Gew.-% beträgt.

Die anorganischen Bindemittel werden der zur Kompaktierung vorgesehenen Zusammensetzung in einer Menge zugegeben, dass die Konzentration des anorganischen Bindemittels, oder die Konzentration eines Gemischs aus anorganischen und organischen Bindemittel, bezogen auf den Anteil an Superabsorber oder Superabsorbern, etwa 0,1 bis etwa 20 Gew.-%, insbesondere etwa 0,5 bis etwa 10 Gew.-%, beträgt.

Im Zuge einer bevorzugten Ausführungsform des erfindungsgemässen Verfahrens werden die Superabsorberpartikel vor der Kompaktierung mit mindestens 1 Gew.-% Wasser, bezogen auf das Gewicht der gesamten, zur Kompaktierung eingesetzten Partikel, vermischt.

Besonders zur Durchführung des erfindungsgemässen Verfahrens geeignet sind Walzenkompaktoren, Doppelwalzenpressen, Ringwalzenpressen oder Stempelpressen wie Kolbenstrangpressen, Schneckenpressen, Extersche Strangpressen.

Gemäß einer weiteren erfindungsgemäßen Ausführungsform des erfindungsgemäßen Verfahrens sowie der erfindungsgemäßen kompaktierten Superabsorber ist es bevorzugt, dass die nur mit einer Untergrenze angegebenen Werte von erfindungsgemäßen Merkmalen eine Obergrenze besitzen, die das 20-fache, vorzugsweise das 10-fache und besonders bevorzugt das 5-fache des am meisten bevorzugten Wertes der Untergrenze besitzen.

Die erfindungsgemässen kompaktierten Superabsorber können grundsätzlich in beliebiger Form einer weiteren Verwendung zugeführt werden. So ist es beispielsweise möglich, die erfindungsgemässen kompaktierten Superabsorber oder Mischungen mit weiteren Substanzen in üblichen Anwendungen wie Hygieneartikeln oder technischen Anwendungen wie Kabeln oder Dichtungen einzusetzen. Es ist im Rahmen der vorliegenden Erfindung jedoch ebenso möglich, die erfindungsgemässen kompaktierten Superabsorber zusammen mit weiteren Superabsorbern, die nicht nach einem erfindungsgemässen Verfahren hergestellt wurden oder nicht den erfindungsgemässen kompaktierten Superabsorbern entsprechen, im Rahmen einer technischen Anwendung einzusetzen.

Im Rahmen einer bevorzugten Ausführungsform der vorliegenden Erfindung werden die erfindungsgemässen kompaktierten Superabsorber zusammen mit nicht kompaktierten Superabsorbern eingesetzt. Als nicht kompaktierte Superabsorber eignen sich grundsätzlich alle üblicherweise unter dem Begriff "Superabsorber" verstandenen Verbindungen. Im Rahmen einer bevorzugten Ausführungsform werden jedoch die erfindungsgemässen kompaktierten Superabsorber zusammen mit nicht kompaktierten Superabsorbern eingesetzt, die eine ähnliche oder identische Zusammensetzung wie die erfindungsgemässen kompaktierten Superabsorber aufweisen.

Im Rahmen einer weiteren bevorzugten Ausführungsform der vorliegenden Erfindung werden zur Herstellung der erfindungsgemässen Superabsorber Partikel mit einer Partikelgröße von weniger als etwa 150 μm eingesetzt, wie sie bei der Herstellung von nicht kompaktierten Superabsorbern anfallen, wobei die erfindungsgemäss kompaktierten Feinanteile anschließend zusammen mit den nicht kompaktierten Superabsorbern, bei deren Herstellung die Feinanteile angefallen sind, im Gemisch eingesetzt werden. Der Anteil an erfindungsgemässen kompaktierten Superabsorbern an einem solchen Gemisch beträgt etwa 0,5 bis etwa 99 Gew.-%, insbesondere etwa 1 bis etwa 20 Gew.-%.

Ebenfalls Gegenstand der vorliegenden Erfindung ist ein Verfahren zur Herstellung eines Verbunds, bei dem ein erfindungsgemäßer kompaktierter Superabsorber oder ein nach einem erfindungsgemässen Verfahren hergestellter kompaktierter Superabsorber mit einem Substrat in Kontakt gebracht wird.

Die vorliegende Erfindung betrifft darüber hinaus auch einen Verbund, erhältlich nach dem im vorhergehenden Abschnitt beschriebenen Verfahren.

Erfindungsgemäss werden unter dem Begriff "Verbund" absorbierende Cores, Dichtmaterialien, Kabel, sowie absorbierende Cores enthaltende Windeln und weitere Hygieneartikel - Damenbinden oder Inkontinentzprodukte - verstanden.

Wenn der Verbund ein absorbierendes Core ist, ist ein erfindungsgemäßer, kompaktierter Superabsorber in ein Substrat eingearbeitet. Für Cores kommen als Substrat überwiegend aus Cellulose bestehende, vorzugsweise faserförmige Materialien in Betracht. In einer Ausführungsform des Cores ist ein erfindungsgemäßer absorbierender Superabsorber in einer Menge im Bereich von 10 bis 90, bevorzugt von 20 bis 80 und besonders bevorzugt von 40 bis 70 Gew.-%, bezogen auf das Core, eingearbeitet. In einer Ausführungsform des Cores ist ein erfindungsgemäßer kompaktierter Superabsorber als Teilchen in das Core eingearbeitet.

Das Core kann zum einen durch ein sogenanntes Airlaid-Verfahren oder durch ein sogenanntes Wetlaid-Verfahren hergestellt werden, wobei ein gemäss dem Airlaid-Verfahren hergestelltes Core bevorzugt ist. In dem Wetlaid-Verfahren werden die Teilchen aus erfindungsgemäßem kompaktiertem Superabsorber zusammen mit weiteren Substratfasern und einer Flüssigkeit zu einem Vlies verarbeitet. In dem Airlaid-Verfahren werden die Teilchen aus erfindungsgemäßem kompaktiertem Superabsorber und die Substratfasern im trockenen Zustand zu einem Vlies verarbeitet. Weitere Einzelheiten zu Airlaid-Verfahren sind in US 5,916,670 sowie US 5,866,242 und zu Wetlaid-Verfahren in US 5,300,192 beschrieben.

In dem Wetlaid- und Airlaid-Verfahren können neben erfindungsgemäßem kompaktiertem Superabsorber und den Substratfasern noch weitere geeignete, dem Fachmann bekannte Hilfsmittel eingesetzt werden, die zur Verfestigung der aus diesem Verfahren gewonnenen Vliese beitragen.

In der Ausführungsform, in welcher der Verbund eine Windel ist, stellen die Bestandteile der Windel, die von dem erfindungsgemässen kompaktierten Superabsorber verschieden sind, das Substrat des Verbundes dar. In einer bevorzugten Ausführungsform enthält die Windel ein zuvor beschriebenes Core. In diesem Fall stellen die von dem Core unterschiedlichen Bestandteile der Windel das Substrat des Verbundes dar. Im allgemeinen umfasst ein als Windel eingesetzter Verbund eine wasserundurchlässige Unterschicht, eine wasserdurchlässige, vorzugsweise hydrophobe, Oberschicht und eine einen erfindungsgemässen kompaktierten Superabsorber beinhaltende Schicht, die zwischen der Unterschicht und der Oberschicht angeordnet ist. Diese einen erfindungsgemässen kompaktierten Superabsorber beinhaltende Schicht ist vorzugsweise ein zuvor beschriebenes Core. Die Unterschicht kann alle dem Fachmann bekannten Materialien aufweisen, wobei Polyethylen oder Polypropylen bevorzugt sind. Die Oberschicht kann gleichfalls alle dem Fachmann bekannten und geeigneten Materialien enthalten, wobei Polyester, Polyolefine, Viskose und dergleichen bevorzugt sind, die eine so poröse Schicht ergeben, die einen ausreichenden Flüssigkeitsdurchlass der Oberschicht sicherstellen. Im Zusammenhang der die Windel betreffenden Ausführungsform wird auf die Offenbarung in US 5,061,295, US Re. 26,151; US 3,592,194; US 3,489,148, US Re 32,649; US 5,047,023; US 4,834,735; EP 0254476 A1; EP 0325416 A1; US 5,061,259; EP 0304319 A1; US 5,147,343; EP 0339461; US 5,149,335; EP 0443627 A1; EP 0765649 A2; US 5,236,427; EP 0469591 A1; US 5,244,735; US 5,026,800; EP 0349240 A1; EP 0349241 A1; US 5,300,054; EP 0565630 A1; US 5,304,161; US 5,439,458; EP 0565606 A1; US 5,180,622; US 5,149,334; EP 0591168 A1; US 5,330,822; US 5,384,179; US 5,300,565; US 5,397,626; US 5,492,962; EP 0525049 A1; US 5,354,290; US 5,403,870; US 5,415,643; EP 0601529; US 5,419,956; US 5,422,169; US 5,505,718; EP 0579764 A1; US 5,509,914; EP 0336578 A1; EP 1029522 A2; US 5,509,915; EP 0532002 A1; EP 0539703 A1; EP 0761191 A2; EP 0761192 A2; US 5,516,569; US 5,562,646; US 5,599,335; US 5,669,894; WO 95/26209; EP 0752892 A1; US 5,601,542; EP 0615736 A1; EP 0962206 A2; US 5,744,564; WO 93/19099; WO 92/16565; EP 0516925 A1; US 5,760,080; EP 0712659, A1; US 5,797,893; EP 0761241 A3; US 5,836,929; US 5,762,641; EP 0631768 A1; EP 640330 A1; US 5,843,059; EP 0863733 A1; US 5,865,822; EP 0937444 A3; EP 0937445 A3; US 5,976,696; EP 0789048 A1; WO 97/43331; EP 0897409 A1; US 6,068,620; WO 99/49826; US 6,110,984; EP 0835885 A2; US 6,121,509; WO 99/34842; EP 1045706; WO 99/34841; EP 1045707; WO 95/05856; EP 0715525 A1; WO 98/47454; EP 0975297 A1; WO 98/48857; EP 0981380 A1; WO 99/53877; EP 0951913 A1; EP 0845272 A1; EP 0872491 A1; EP 0882502 A1; EP 0940148 A1; US 5,941,862; EP 0873101; WO 9725013 sowie US 3,860,003 verwiesen.

Bei den Dichtungsmaterialien handelt es sich vorzugsweise um wasserabsorbierende Filme, worin ein erfindungsgemäßer kompaktierter Superabsorber in einer Polymermatrix oder Fasermatrix als Substrat eingearbeitet ist. Dieses erfolgt vorzugsweise dadurch, dass ein erfindungsgemäßer kompaktierter Superabsorber mit einem die Polymer- oder Fasermatrix bildenden Polymer (Pm) gemischt und anschließend durch gegebenenfalls thermische Behandlung verbunden wird.

In der Ausführungsform, in welcher der Verbund ein Kabel ist, kann ein erfindungsgemäßer kompaktierter Superabsorber als Teilchen direkt, vorzugsweise unter der Isolierung des Kabels eingesetzt werden. In einer anderen Ausführungsform des Kabels kann ein erfindungsgemäßer kompaktierter Superabsorber in Form von schwellbaren, zugfesten Garnen eingesetzt werden. Gemäss einer anderen Ausführungsform des Kabels, kann ein erfindungsgemäßer kompaktierter Superabsorber als quellbarer Film eingesetzt werden. Wiederum in einer anderen Ausführungsform des Kabels kann ein erfindungsgemäßer kompaktierter Superabsorber als feuchtigkeitsabsorbierende Seele in der Mitte des Kabels eingesetzt werden. Das Substrat bildet im Fall des Kabels alle Bestandteile des Kabels, die keinen erfindungsgemässen kompaktierten Superabsorber enthalten. Hierunter fallen die in dem Kabel eingebauten Leiter, wie elektrische Leiter oder Lichtleiter, optische bzw. elektrische Isoliermittel sowie Bestandteile des Kabels, welche die mechanische Beanspruchbarkeit des Kabels gewährleisten, wie Geflechte, Gewebe oder Gewirke aus zugfesten Materialien wie Kunststoffen und Isolierungen aus Gummi oder anderen Materialien, welche die Zerstörung der Aussenhaut des Kabels verhindern.

Weiterhin betrifft die Erfindung ein Verfahren zur Herstellung eines Verbunds, wobei ein erfindungsgemäßer kompaktierter Superabsorber und ein Substrat und ggf. ein geeignetes Hilfsmittel miteinander in Kontakt gebracht werden. Das in Kontakt bringen erfolgt vorzugsweise durch Wetlaid- und Airlaid-Verfahren, Kompaktieren, Extrudieren und Mischen.

Zudem betrifft die Erfindung einen Verbund, der durch das vorstehende Verfahren erhältlich ist.

Ferner betrifft die Erfindung Schäume, Formkörper, Fasern, Folien, Filme, Kabel, Dichtungsmaterialien, flüssigkeitsaufnehmende Hygieneartikel, Träger für pflanzen- und pilzwachstumsregulierende Mittel, Zusätze für Baustoffe, Verpackungsmaterialien und Bodenzusätze, die einen erfindungsgemässen kompaktierten Superabsorber oder ein vorstehend beschriebenes Substrat beinhalten.

Außerdem betrifft die Erfindung die Verwendung eines erfindungsgemässen kompaktierten Superabsorbers oder eines zuvor beschriebenen Substrats in Schäumen, Formkörpern, Fasern, Folien, Filmen, Kabeln, Dichtungsmaterialien, flüssigkeitsaufnehmenden Hygieneartikeln, Trägern für pflanzen- und pilzwachstumsregulierende Mittel, Zusätze für Baustoffe, Verpackungsmaterialien und Bodenzusätze.

Die Erfindung wird nachfolgend durch Beispiele näher erläutert. Nur die Beispiele 11, 15 und 17 sind erfindungsgemäß.

## TESTMETHODEN

CENTRIFUGATION RETENTION CAPACITY (CRC)

Die CRC wird nach der Teebeutelmethode und als Mittelwert aus drei Messungen angegeben. Etwa 200 mg Polymerisat werden in einen Teebeutel eingeschweißt und für 30 Minuten in 0,9%ige NaCl-Lösung getaucht. Anschließend wird der Teebeutel in einer Schleuder (23 cm Durchmesser, 1.400 Upm) 3 Minuten geschleudert und gewogen. Einen Teebeutel ohne wasserabsorbierendes Polymerisat lässt man als Blindwert mitlaufen.

ABSORBENCY AGAINST PRESSURE (AAP)

Die Aufnahme unter Druck (Druckbelastung 0,7 psi) wird nach einer in der EP 0 339 461, Seite 7, beschriebenen Methode bestimmt. In einen Zylinder mit Siebboden werden ca. 0,9 g Superabsorber eingewogen. Die gleichmäßig aufgestreute Superabsorberlage wird mit einem Stempel belastet, der einen Druck von 0,7 psi ausübt. Der zuvor gewogene Zylinder wird anschließend auf eine Glasfilter-platte gestellt, die sich in einer Schale mit 0,9%iger NaCl-Lösung befindet, deren Flüssigkeitsniveau genau der Höhe der Filterplatte entspricht. Nachdem man die Zylindereinheit 1 Stunde lang 0,9%ige NaCl-Lösung hat saugen lassen, wird diese zurückgewogen und der AAP wie folgt berechnet:

$$AAP = \text{Auswaage (Zylindereinheit + gequollener Superabsorber)-Einwaage}$$

$$\text{(Zylindereinheit + Superabsorber) / Einwaage Superabsorber.}$$

STABILITÄTSTEST

Der Stabilitätstest wird mit einer Walzenmühle US Stoneware Jar Mill (US Stoneware Modell 755) durchgeführt. Dazu werden 10 g kompaktierter Superabsorber in den Mahltopf (Alumina fortified Grinding Jar; Stoneware 774, Size 000) gegeben zusammen mit 127 g des Mahlmittels (zylindrische Porzellanstücke; Stoneware 0,5 Zoll O.D. * 0,5 Zoll lang).
Der Mahltopf wird verschlossen, auf die Walzenmühle gelegt, und es wird 6 Minuten bei 95 Upm gemahlen. Anschließend wird das Komspektrum des kompaktierten Superabsorbers gemessen. Je geringer der Anteil < 150 $\mu$m ist, umso stabiler sind die Kompaktate.

QUELLDRUCK

Dieses Verfahren diente der Beurteilung, wie schnell ein Quellkörper seinen maximalen Quellzustand erreicht und welcher Quelldruck sich in dem Prüfmedium einstellt.
In dieser Methode wurden ein Stevens L.F.R.A Texture Analyser, ein Messkörper mit eiern Höhe von 3,5 cm und einem Durchmesser von 2,5 cm, einem Messzylinder mit einer Höhe von 7,4 c, und einem Innendurchmesser von 2,7 cm, einer Waage mit 0,01 g Genauigkeit, einer Laborbühne, einem XYT-Schreiber, einem Meßzylinder von 10 ml sowie einem 20 bis 50 mesh Sieb, USA Standart ASTM und als Chemikalien destilliertes Wasser mit einem pH-Wert von 6-7, ae kleiner gleich 4 $\mu$s/cm sowie NaCl reinst der Firma Merk mit der Artikel-Nummer 6400 eingesetzt.
Es wurden 0,500 g Produkt der Fraktion 20 bis 50 mesh in den Messzylinder eingewogen und mit 10 ml 0,9 Gew.-%ger wässriger NaCl-Lösung versetzt. Nun wurde der Zylinder mit Hilfe einer Laborbühne bis unter die Geräteunterkante hochgefahren und fixiert. Die Messung erfolgte mit den Einstellungen Speed von 1,0 mm/s, Distance 00 und Hold. Der Quelldruck wurde in Gramm von dem XYT-Schreiber abgelesen.

## BEISPIELE

Beispiel 1:

300 kg Acrylsäure wurde mit 429,1 kg $H_2O$; 1,2 kg Allyloxypolyethylenglykolacrylsäureester und 1,2 kg Polyethylenglykol-300-diacrylat gemischt und auf 10°C gekühlt. Danach wurden unter Kühlen insgesamt 233,1 kg 50%ige Natronlauge so langsam zugesetzt, dass die Temperatur nicht 30°C überstieg. Anschließend wurde die Lösung bei 20°C mit Stickstoff gespült und dabei weiter abgekühlt. Bei Erreichen der Starttemperatur von 4°C wurden die Initiatorlösungen (0,1 kg 2,2'-Azobis-2-amidinopropan-dihydrochlorid in 10 kg $H_2O$; 0,15 kg Natriumperoxydisulfat in 10 kg $H_2O$; 0,1 kg 30%ige Wasserstoffperoxidlösung in 1 kg $H_2O$ und 0,01 kg Ascorbinsäure in 2 kg Wasser) zugesetzt. Die Polymerisation wurde auf einem Endlosband mit einer Verweilzeit von ca. 40 Minuten durchgeführt. Das entstandene Gel wurde zerkleinert und bei 150-180°C 60 Minuten getrocknet. Das getrocknete Polymerisat wurde grob zerstoßen, gemahlen und kontinuierlich zu einem Pulver mit einer Partikelgröße von 150 bis 850 μm abgesiebt. Die Feinst-Fraktion zeigte folgende Kornverteilung:

| | |
|---|---|
| > 200 μm | 8 % |
| > 150 μm | 53% |
| < 150 μm | 39% |
| CRC | 26 g/g |

Beispiel 2:

Die Fraktion 150-850 μm aus Beispiel 1 wurde mit 2 % einer Lösung aus 1 Teil Ethylencarbonat und 1 Teil Wasser kontinuierlich in einem Intensivmischer beschichtet und in einem Paddeltrockner auf 185°C erhitzt (Verweilzeit ca. 90 Min.). Der durch Abrieb erzeugte Feinstanteil wurde abgesiebt.

| Kornverteilung: | > 200 μm | 4 % |
|---|---|---|
| | > 150 μm | 47 % |
| | < 150 μm | 49 % |
| | CRC | 19 g/g |
| | AAP 0.7 psi | 18,5 g/g |

Beispiele 3 bis 11:

Die Feinst aus Beispiel 2 wurden in einer hydraulischen Presse (Weber, PW20) kompaktiert unter Einsatz verschiedener Bindemittel bei Drucken von $1,7 \cdot 10^3$ N/cm² bis $33,7 \cdot 10^3$ N/cm². Die Feinst wurden mit den Bindemitteln mit Hilfe eines Krupps Küchenmixers vermischt, und 7 g der Mischung wurden in einem runden Behälter (Durchmesser 27,5 mm) für 15 Sekunden unter dem angegebenen Druck kompaktiert.

| Beispiel | Druck $10^3$ N/cm² | Bindemittel [Gew.-% bezogen auf Fines] | Stabilität der Tabletten | Bruchkraft N |
|---|---|---|---|---|
| 3 | 1,7 | Nein | Nein | --- |
| 4 | 33,7 | Nein | sehr gering | --- |
| 5 | 16,8 | Wasser [1] | gering | --- |
| 6 | 16,8 | Wasser [5] | gut | --- |
| 7 | 25,3 | Wasser [5] | sehr gut | 770 N |
| 8 | 16,8 | Estekoll 20/50 [1]) [10] | gut | --- |
| 9 | 16,8 | Sarpifan HF 3OO [1]) [10] | gut | --- |
| 10 | 25,3 | Eudragit NE30D[2]) [5] | gut | 191 N |
| 11 | 25,3 | Wasser/ Aluminiumsulfat • 18 $H_2O$(1:1) [6] | sehr gut | 1105N |
| 1) Handelsprodukt der Fa. Stockhausen GmbH & Co. KG | | | | |
| 2) Handelsprodukt der Fa. Röhm GmbH | | | | |

Beispiel 12:

Die Feinst aus Beispiel 2 wurden in einem Eirich-Intensivmischer, Typ R02, mit 5 Gew.-% Wasser, bezogen auf das Gewicht der Fines, vermischt. Dieses Produkt wurde anschließend auf einem Hosokawa-Bepex-Laborkompaktor, Typ L 200/50, kompaktiert.

| | |
|---|---|
| Spezifische Anpresskraft: | 120 kN/cm |
| Temperatur: | 55 - 60° |
| Durchsatz: | 25 - 30 kg/h |

Der kompaktierte Superabsorber wurde anschließend in einem Siebgranulator (Frewitt, Typ MG 633) mit einem 0,8 mm Sieb zerkleinert.

| | | |
|---|---|---|
| Ausbeute: | 48 % kompaktierter Superabsorber > 150 μm | |
| Kornverteilung: | 49 % | > 150 μm |
| | 32 % | > 300 μm |
| | 19% | > 600 μm |
| CRC: | 18 g/g | |
| AAP O,7psi: | 16 g/g | |

Die Produkte sind stabil, stauben nicht und zerfallen nicht beim Quellen.

Beispiel 13:

Wie in Beispiel 12 beschrieben, wurden Feinst aus Beispiel 1 kompaktiert und anschließend im Siebgranulator zerkleinert.

| | | |
|---|---|---|
| Ausbeute: | 62 % kompaktierter Superabsorber > 150 μm | |
| Kornverteilung: | 41 % | > 150 μm |
| | 33 % | > 300 μm |
| | 26 % | > 600 μm |
| CRC: | 25 g/g | |

Beispiele 14 bis 17:

In einem kontinuierlichen Versuch wurden Feinst mit einem Bindemittel in einem Shuggi-Mischer vermischt und auf einem Bepex-Walzenkompaktor kompaktiert. Der Durchsatz betrug 400-500 kg/h und die spezifische Anpresskraft 40 kN/cm. Anschließend wurde der kompaktierte Superabsorber auf einer Walzenmühle zerkleinert und auf 150-850 μm gesiebt.

| Beispiel | Feinst aus Beispiel | Bindemittel [1] | CRC g/g | AAP 0,7 psi | Kornverteilung % >150 | >300 μm | >600 | Stabilität nach Kugelmühle >150um |
|---|---|---|---|---|---|---|---|---|
| 14 | 1 | A | 26 | 9 | 37 | 44 | 19 | 68% |
| 15 | 1 | B | 25 | 8 | 29 | 41 | 30 | 71% |
| 16 | 2 | A | 18 | 17 | 18 | 49 | 33 | 77% |
| 17 | 2 | B | 17 | 16 | 21 | 47 | 32 | 83% |
| Vergl. | 2 | kein | 19 | 18 | 0 (keine Kompakte) | 0 | | --- |
| (1) Bindemittel A: 6,6 % Wasser Bindemittel B: 6 % Lösung (Wasser/Aluminiumsulfat • 18 H₂O 1:1) | | | | | | | | |

Beispiel 18 und 19:

Auf einer M+J Airlaid-Anlage wurden homogene Airlaids mit folgender Zusammensetzung hergestellt:

| | | |
|---|---|---|
| Fluff: | Stora, EF unbehandelt | 117 g/m² |
| Bico-Faser: | Danaklon, AL-Thermal-C.Phil, 6 mm-3,3dtex | 27 g/m² |
| Tissue : | Finess | 18 g/m² |
| Kompaktierter Superabsorber: | | 43 g/m² |

Die Absorptionskerne mit kompaktierten Superabsorbern wurden im Vergleich zu FAVOR SX FAM (Stockhausen Produkt) geprüft.

Ein Airlaid mit den Maßen 19,5 x 7,5 cm und einem Gewicht von ca. 4,0 g wird in einen U-förmigen Träger (Durchmesser ca. 28 cm) gelegt und mit einem Gewicht von 500 g belastet. Mittels einer Pumpe werden 20 g Testflussigkeit[1] innerhalb von 30 Minuten in die Mitte des Prüflings dosiert. Nach weiteren 60 Minuten wird das Airlaid gewogen und die Absorption aus der Differenz der Gewichte des feuchten und des trockenen Airlaids berechnet.

Zur Bestimmung des Rewet werden 50 g Filterpapiere gleichmäßig über den Prüfkörper gelegt und mit 500 g belastet. Nach 10 Minuten wird die Gewichtszunahme der Filterpapiere gemessen und als Rewet angegeben. Anschließend wird der Prüfkörper 5 Minuten in einer Schleuder bei 1400 Upm geschleudert. Die Retention ergibt sich aus der Differenz der Gewichte des geschleuderten und des trockenen Airlaids.

[1] Zusammensetzung für 1000 g der Lösung:

| | |
|---|---|
| NaCl: | 6,100 g |
| $NaHCO_3$: | 2,300 g |
| $CaCl_2$: | 0,300 g |
| Albumin: | 65,000 g |
| CMC: | 13,000 g |
| Antispumin DNF (10 Gew.-%ige Lösung): | 4,000 g |
| Kosmetikfarbstoff: | 4,000 g |
| Wasser: | 905,300 g |

Die Salze, das Albumin und die CMC werden in obengenannter Reihenfolge dem VE-Wasser, unter Rühren, zugegeben. Nach vollständigem Auflösen der Komponenten wird, zur Verminderung der Schaumbildung, Antispumin DNF hinzugefugt. Anschließend gibt man den Farbstoff zu und stellt den pH-Wert mit verd. Salzsäure bzw. verd. Natronlauge auf pH = 7,4 ein. Die Lösung ist bei Kühlung (max. +10°C) maximal 3 Tage haltbar.

| Superabsorber im Airlaid | aus Beispiel 16 | aus Beispiel 17 | SXFAM |
|---|---|---|---|
| Absorption (g) | 20,1 | 19,9 | 20,1 |
| Rewet (g) | 3,3 | 3,3 | 8,9 |
| Retention (g) | 15,2 | 14,6 | 14,1 |

**Patentansprüche**

1. Kompaktierte Superabsorber, herstellbar, indem eine Zusammensetzung, mindestens enthaltend synthetische partikelförmige Superabsorber sowie ein anorganisches Bindemittel, einer spezifischen Anpresskraft von mindestens 3 kN/cm oder einem Druck von mindestens 3 kN/cm$^2$ ausgesetzt werden, wobei mehr als 5 % der eingesetzten Partikel eine Partikelgröße von 250 $\mu$m oder weniger aufweisen.

2. Superabsorber nach Anspruch 1, wobei das anorganische Bindemittel in Form einer wässrigen Lösung vor dem Kompaktierung mit dem Superabsorber vermischt wird.

3. Superabsorber nach Anspruch 1 oder 2, wobei das anorganische Bindemittel ein anorganisches Salz eines mehrwertigen Kations ist.

4. Superabsorber nach Anspruch 3, wobei das anorganische Salz in Form einer wässrigen Lösung eingesetzt wird, in der das anorganische Salz in einer Konzentration von 20 bis 70 Gew.-% enthalten ist.

5. Superabsorber nach Anspruch 3 oder 4, wobei als anorganisches Bindemittel eine wässrige Lösung von $Al_2(SO_4)_3$. 18 $H_2O$ eingesetzt wird.

6. Superabsorber nach einem der vorhergehenden Ansprüche, wobei mehr als 35 % der eingesetzten Partikel eine Partikelgröße von 150 $\mu$m oder weniger aufweisen.

7. Superabsorber nach einem der vorhergehenden Ansprüche, wobei die Zusammensetzung einen Wassergehalt von mindestens 1 Gew.-% aufweist.

8. Superabsorber nach einem der vorhergehenden Ansprüche, wobei der partikelförmige Superabsorber ein nachvernetzter Superabsorber ist.

9. Verfahren zur Herstellung kompaktierter Superabsorber, bei dem eine Zusammensetzung, mindestens enthaltend synthetische partikelförmige Superabsorber sowie ein anorganisches Bindemittel, kompaktiert wird indem die Zusammensetzung einer spezifischen Anpresskraft von naindestens 3 kN/cm oder einem Druck von mindestens 3 kN/cm$^2$ ausgesetzt wird, wobei mehr als 5 % der eingesetzten Partikel eine Partikelgröße von 250 $\mu$m oder weniger aufweisen.

10. Verfahren nach Anspruch 9, wobei das wobei das anorganische Bindemittel in Form einer wässrigen Lösung vor dem Kompaktierung mit dem Superabsorber vermischt wird.

11. Verfahren nach Anspruch 9 oder 10, wobei das anorganische Bindemittel ein anorganisches Salz eines mehrwertigen Kations ist.

12. Verfahren nach einem der vorhergehenden Ansprüche, wobei das anorganische Salz in Form einer wässrigen Lösung eingesetzt wird, in der das anorganische Salz in einer Konzentration von 20 bis 70 Gew.-% enthalten ist.

13. Verfahren nach Anspruch 11 oder 12, wobei als anorganisches Bindemittel eine wässrige Lösung von $Al_2(SO_4)_3$. 18 $H_2O$ eingesetzt wird.

14. Verfahren nach einem der vorhergehenden Ansprüche, wobei mehr als 35 % der eingesetzten Partikel eine Partikelgröße von weniger als 150 $\mu$m aufweisen.

15. Verfahren nach einem der vorhergehenden Ansprüche, wobei die Partikel vor der Kompaktierung mit mindestens 1 Gew.-% Wasser, bezogen auf das Gewicht der gesamten, zur Kompaktierung eingesetzten Partikel, vermischt werden.

16. Verfahren nach einem der vorhergehenden Ansprüche, wobei der partikelförmige Superabsorber ein nachvernetzter Superabsorber ist.

17. Verfahren zur Herstellung eines Verbunds, bei dem ein kompaktierter Superabsorber gemäss einem der Ansprüche 1 bis 8 oder ein nach einem Verfahren gemäss einem der Ansprüche 9 bis 16 hergestellter kompaktierter Superabsorber mit einem Substrat in Kontakt gebracht wird.

18. Verbund, erhältlich nach einem Verfahren nach Anspruch 17.

19. Schäume, Formkörper, Fasern, Folien, Filme, Kabel, Dichtungsmaterialien, flüssigkeitsaufnehmende Hygieneartikel, Träger für Pflanzen- und Pilzwachstum regulierende Mittel, Verpackungsmaterialien, Bodenzusätze oder Baustoffe, enthaltend einen kompaktierten Superabsorber nach einem der Ansprüche 1 bis 8 oder einen nach einem der Ansprüche 9 bis 16 hergestellten kompaktierten Superabsorber, oder ein Gemisch aus zwei oder mehr davon.

20. Verwendung eines kompaktierten Superabsorbers gemäss einem der Ansprüche 1 bis 8 oder eines gemäss einem der Ansprüche 8 bis 16 hergestellten kompaktierten Superabsorbers, oder ein Gemisch aus zwei oder mehr davon, oder eines gemäss Anspruch 17 hergestellten Verbunds oder eines Verbunds gemäss Anspruch 18 in Schäumen, Formkörpern, Fasern, Folien, Filmen, Kabeln, Dichtungsmaterialien, flüssigkeitsaufnehmenden Hygieneartikeln, Trägem für Pflanzen und Pilzwachstum regulierenden Mitteln, Verpackungsmaterialien, Bodenzvsätzen oder Baustoffen.

**Claims**

1. Compacted superabsorber, producible in that a composition, at least comprising synthetic particulate superabsorber as well as an inorganic binding agent, is subjected to a specific contact force of at least 3 kN/cm or a pressure of at least 3 kN/cm$^2$, wherein more than 5 % of the particles used have a particle size of 250 $\mu$m or less.

2. Superabsorber according to claim 1, wherein the inorganic binding agent in the form of an aqueous solution is mixed with the superabsorber before the compacting.

3. Superabsorber according to claim 1 or 2, wherein the inorganic binding agent is an inorganic salt of a polyvalent cation.

4. Superabsorber according to claim 3, wherein the inorganic salt is used in the form of an aqueous solution, in which the inorganic salt is comprised in a concentration of 20 to 70 wt.-%.

5. Superabsorber according to claim 3 or 4, wherein as inorganic binding agent an aqueous solution of $Al_2(SO_4)_3 \cdot 18H_2O$ is used.

6. Superabsorber according to any one of the preceding claims, wherein more than 35% of the particles used have a particle size of 150 $\mu$m or less.

7. Superabsorber according to any one of the preceding claims, wherein the composition has a water content of at least 1 wt.-%.

8. Superabsorber according to any one of the preceding claims, wherein the particulate superabsorber is a post-crosslinked superabsorber.

9. Process for producing compacted superabsorbers, in which a composition at least comprising synthetic particulate superabsorber as well as an inorganic binding agent, is compacted in that the composition is subjected to a specific contact force of at least 3 kN/cm or a pressure of at least 3kN/cm$^2$, wherein more than 5 % of the particles used have a particle size of 250 $\mu$m or less.

10. Process according to claim 9, wherein the inorganic binding agent in the form of an aqueous solution is mixed with the superabsorber before the compacting.

11. Process according to claim 9 or 10, wherein the inorganic binding agent is an inorganic salt of a polyvalent cation.

12. Process according to any one of the preceding claims, wherein the inorganic salt is used in the form of an aqueous solution, in which the inorganic salt is comprised in a concentration of 20 to 70 wt.-%.

13. Process according to claim 11 or 12, wherein as inorganic binding agent an aqueous solution of $Al_2(SO_4)_3 \cdot 18H_2O$ is used.

14. Process according to any one of the preceding claims, wherein more than 35 % of the particles used have a particle size of less than 150 $\mu$m.

15. Process according to any one of the preceding claims, wherein before the compacting the particles are mixed with at least 1 wt.-% water, based on the weight of the total particles used for compacting.

16. Process according to any one of the preceding claims, wherein the particulate superabsorber is a post-crosslinked superabsorber.

17. Process for producing a composite, in which a compacted superabsorber according to any one of claims 1 to 8 or a compacted superabsorber produced according to a process according to any one of claims 9 to 16 is brought into contact with a substrate.

18. Composite obtainable by a process according to claim 17.

19. Foams, formed bodies, fibres, sheets, films, cables; sealing materials, liquid-absorbing hygiene articles, carriers for plant and fungus growth-regulating agents, packaging materials, soil additives or building materials, comprising a compacted surperabsorber according to any one of claims 1 to 8 or a compacted superabsorber produced according to any one of claims 9 to 16, or a mixture of two or more thereof.

20. Use of a compacted superabsorber according to any one of claims 1 to 8 or of a compacted superabsorber produced according to any one of claims 8 to 16, or a mixture of two or more thereof, or of a composite produced according to claim 17 or of a composite according to claim 18 in foams, formed bodies, fibres, sheets, films, cables, sealing materials, liquid-absorbing hygiene articles, carriers for plant and fungus growth-regulating agents, packaging materials, soil additives or building materials.

**Revendications**

1. Super-absorbants compactés qui peuvent être fabriqués en soumettant une composition, contenant au moins des super-absorbants synthétiques en forme de particules ainsi qu'un agent liant inorganique, à une force d'application spécifique d'au moins 3 kN/cm ou à une pression d'au moins 3 kN/cm$^2$, dans quel cas plus de 5 % des particules utilisées ont une taille de particules de 250 µm ou moins.

2. Super-absorbants selon la revendication 1, dans quel cas avant le compactage l'agent liant inorganique est mélangé en forme d'une solution aqueuse avec le super-absorbant.

3. Super-absorbant selon la revendication 1 ou 2, l'agent liant inorganique étant un sel inorganique d'un cation polyvalent.

4. Super-absorbant selon la revendication 3, le sel inorganique étant utilisé en forme d'une solution aqueuse, dans laquelle le sel inorganique est contenu en une concentration de 20 à 70 % en poids.

5. Super-absorbant selon la revendication 3 ou 4, dans quel cas une solution aqueuse de $Al_2(SO_4)_3 \cdot 18H_2O$ est utilisée comme agent liant inorganique.

6. Super-absorbant selon l'une des revendications précédentes, dans quel cas plus de 35 % des particules utilisées ont une taille de particules de 150 µm ou moins.

7. Super-absorbant selon l'une des revendications précédentes, la composition ayant une teneur en eau d'au moins 1 % en poids.

8. Super-absorbant selon l'une des revendications précédentes, le super-absorbant en forme de particules étant un super-absorbant post-réticulé.

9. Procédé pour fabriquer des super-absorbants compactés, dans lequel une composition, contenant au moins des super-absorbants synthétiques en forme de particules ainsi qu'un agent liant inorganique, est compactée en soumettant la composition à une force d'application spécifique d'au moins 3 kN/cm ou à une pression d'au moins 3 kN/cm$^2$, dans quel cas plus de 5 % des particules utilisés ont une taille de particules de 250 µm ou moins.

10. Procédé selon la revendication 9, dans quel cas avant le compactage l'agent liant inorganique est mélangé en forme d'une solution aqueuse avec le super-absorbant.

11. Procédé selon la revendication 9 ou 10, l'agent liant inorganique étant un sel inorganique d'un cation polyvalent.

12. Procédé selon l'une des revendications précédentes, le sel inorganique étant utilisé en forme d'une solution aqueuse, dans laquelle le sel inorganique est contenu en une concentration de 20 à 70 % en poids.

13. Procédé selon la revendication 11 ou 12, dans quel cas une solution aqueuse de $Al_2(SO_4)_3 \cdot 18H_2O$ est utilisée comme agent liant inorganique.

14. Procédé selon l'une des revendications précédentes, dans quel cas plus de 35 % des particules utilisées ont une taille de particules de moins de 150 µm.

15. Procédé selon l'une des revendications précédentes, dans quel cas avant d'être compactées les particules sont mélangées avec au moins 1 % en poids d'eau en référence au poids de toutes les particules utilisées pour être compactées.

16. Procédé selon l'une des revendications précédentes, dans quel cas le super-absorbant en forme de particules est un super-absorbant post-réticulé.

**17.** Procédé pour fabriquer un composite, dans lequel un super-absorbant compacté selon l'une des revendications 1 à 8 ou un super-absorbant compacté fabriqué selon l'une des revendications 9 à 16 est mis en contact avec un substrat.

**18.** Composite pouvant être obtenu selon un procédé selon la revendication 17.

**19.** Mousses, corps moulés, fibres, feuilles, films, câbles, matériaux d'étanchéité, articles hygiéniques absorbant du liquide, supports pour agents de régulation de la croissance de plantes et de champignons, matériaux d'emballage, additifs pour sols ou matériaux de construction, contenant un super-absorbant compacté selon l'une des revendications 1 à 8 ou un super-absorbant fabriqué selon l'une des revendications 9 à 16, ou un mélange de deux ou de plus de ceux-ci.

**20.** Utilisation d'un super-absorbant compacté selon l'une des revendications 1 à 8 ou d'un super-absorbant compacté fabriqué selon l'une des revendications 8 à 16 ou d'un mélange de deux ou plus de ceux-ci, ou d'un composite fabriqué selon la revendication 17 ou d'un composite selon la revendication 18, dans des mousses, corps moulés, fibres, feuilles, films, câbles, matériaux d'étanchéité, articles hygiéniques absorbant du liquide, supports pour agents de régulation de la croissance de plantes et de champignons, matériaux d'emballage, additifs pour sols ou matériaux de construction.